# EUROPEAN PATENT APPLICATION

(11) **EP 1 205 838 A2**
(43) Date of publication of application: **15.05.2002**
(21) Application number: 01125491.9
(22) Date of filing: 06.11.2001
(51) Int. Cl.: G06F 3/08

(54) **Carryable memory media, portable information terminal using the same and method for managing files therein**

(30) Priority: 07.11.2000 JP 2000338658; 13.11.2000 JP 2000344786; 19.03.2001 JP 2001077889
(71) Applicant: MATSUSHITA ELECTRIC INDUSTRIAL CO., LTD., Kadoma-shi, Osaka 571-8501 (JP)
(72) Inventor: Toyomura, Yuji, Fukuoka-shi, Fukuoka 819-0373 (JP); Sugauchi, Toshiaki, Kasuya-gun, Fukuoka 811-2401 (JP); Otsu, Kazunori, Dazaifu-shi, Fukuoka 818-0133 (JP)
(74) Representative: Balsters, Robert

(57) **Abstract**

In the present invention, the carryable memory media is provided with a directory for storing specific format files having a certain specific file form and a directory for storing non-specific format files having any free form. The portable information terminal comprises the above carryable memory media detachable to and from the terminal body, and is provided with means for storing the non-specific format files in said carryable memory media and stores a file in said carryable memory media at a data area corresponding to the directory formed for storing non-specific format files. The portable information terminal is also provided with means for forming a directory for storing specific format files, and stores a file in said carryable memory media at a data area corresponding to the directory formed for storing specific format files.

## Description

### FIELD OF THE INVENTION

The present invention relates to such a carryable memory media as memory card used in various kinds of portable information terminals. The present invention also contains a process of data storage and extraction performed by the portable information terminal unit, which uses the carryable memory media.

### BACKGROUND OF THE INVENTION

In line with the steep increase of digital picture apparatus such as a digital still camera for taking still pictures (hereinafter referred to as DSC), a digital video cassette recorder for taking still pictures and moving pictures (DVC), in the market, an increasing number of compact memory cards are being used in combination with these apparatus. Personal computers (PC) also use the memory cards of the same specifications as the digital picture apparatus; as the result, a DSC and a PC, or a DVC and a PC, can share a memory card in common. Thus a memory card is used in both the digital picture apparatus and the PC, so that the memory card adopts a format that conforms to the DOS (Disk Operation System) of PC.

Besides the above described examples related to DSC and DVC, the memory cards are now used for downloading and storing music data, video data and other contents delivered to a PC through the Internet. The memory card can be put in other specific reproduction equipment, so that the reproduction equipment can reproduce music sound, picture on display, photocopy, etc, depending on respective kinds of contents for reproduction.

In the face of increasing types of contents stored in a memory card, it has been urged to store contents files of various forms efficiently in a memory card, so as to make full use of them.

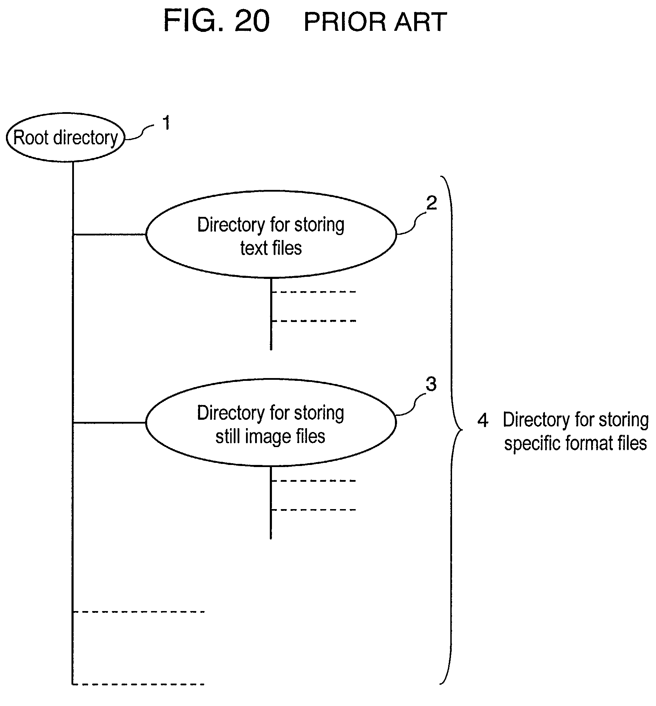

FIG. 20 shows a conventional directory structure in a memory card.

In the following, a directory structure of memory card are described together with the operation of an equipment capable of storing and reading the file in the memory card, with reference to FIG. 20.

In FIG. 20, the directory comprises a root directory 1 and a directory group 4, which stores specific format files and is managed by rules that prohibit storage of other files than those having a certain predetermined specific form. The directory group 4 for storing specific format files contains, for example, a directory 2 for storing text format or the like text format files, and a directory 3 for storing Exif format still image files or the like still image format files.

If a memory card does not contain these directories 2 and 3, a portable information terminal unit forms the directories 2 and 3 for storing specific format files in the memory card before performing writing-in, then it writes a file in memory card.

For example, when an e-mail terminal unit stores an incoming e-mail document file in a memory card, it refers to the directory entry and the FAT (File Allocation Table), so as to form a directory 2 for storing text files at a lower branch of the root directory 1. The directory 2 is one among the directory group 4 for storing specific format files.

In the same way, when storing Exif format file in a memory card, a portable information terminal such as DSC and DVD forms a directory 3 for storing still image files as the one among the directory group 4 for storing specific format files, if there is no directory for the corresponding form.

Although there is no description in FIG. 20, when a PC is going to store MP3 and the like music data delivered through the Internet in a memory card, it forms a directory for storing music files by a similar software to PC.

Such a portable information terminal unit as DSC, DVC, e-mail terminal unit and PC does not form a new directory when there is a directory already existing for storing the files.

Each of the respective portable information terminal units provides a file name to the files in accordance with certain specific rules, and stores the file in a data area which corresponds to the directory, already existing or newly formed.

On the other hand, an information terminal unit has a function of, for example, reproducing those contents contained in it through a video process or an audio process. The information terminal unit accesses to a certain specific directory 2, or directory 3, etc. among the directory group 4 for storing specific format files so as to extract a certain specific file out of the memory card. Then, the information terminal unit takes out from the data area a file of certain specific file format which it can handle by itself, so as to perform a video processing, audio processing and other necessary procedures thereon.

In an exemplary case where the information terminal unit is a thermal printer or the like image display unit suitable to reproduce binary-level coded images, the thermal printer takes out a text format file from the data area in accordance with the directory 2 for storing text files, which being one among the directory group 4 for storing specific format files formed in the memory card, so that the thermal printer prints the images after applying a certain specific image processing.

If the information terminal unit is a video printer or the like image display apparatus suitable to form multi-level coded images, the video printer takes out an Exif format file from the data area based on the directory 3 for storing still image files, which being one among the directory group 4 for storing specific format files formed in the memory card, so that the video printer prints the still image after applying a certain specific image processing.

In a case where the information terminal unit is an audio player or the like music reproduction apparatus, the audio player takes out an MP3 format file from the data area based on a directory (not shown) for storing music files, which being one among the directory group 4 for storing specific format files formed in the memory card, so that the audio player reproduces music sound after applying a certain specific data processing.

As described in the above, a portable information terminal unit forms files of a certain specific format, so that it can store merely the files of a certain specific format in the data area in accordance with the directory for storing specific format files corresponding to respective contents.

However, such a portable information terminal unit as an portable telephone unit can acquire various types of contents through the Internet, so that upon browsing the portable telephone unit, for example, downloading and then storing a contents file received as an attachment to e-mail, into a data area corresponding to the directory of above-described specific format file. In order to meet the above situation, a portable telephone unit needs to be capable of judging the format of the files received, and then of storing them surely in respective data areas corresponding respectively to the directory for such respective specific format files as the text, the still picture, the music, etc. At the present stage, it is difficult in practice to incorporate such process and functions in a portable information terminal unit, because of limitation in the scale of hardware and software resources available for mounting in a portable telephone unit and of limitation of the processing time.

Sometime in the future when files of new formats not yet conceived at present would be put on the communicating services, a portable information unit may have a fatal problem that it is compelled to discard the contents files received, because of the reasons that there is no directory existing for storing the file, or unable to form a new directory for storing specific format files since the file format is not known yet.

### SUMMARY OF THE INVENTION

The present invention addresses the above-described conventional drawbacks. The present invention aims to offer easy-to-use memory media with which a user can manage a plurality of different types of files stored and to store therein. Carryable memory media of the present invention comprises a directory for storing specific format files having a certain predetermined specific file form, and a directory for storing non-specific format files having free forms. A portable information terminal unit comprises the above carryable memory media detachable to and from the terminal body, and comprises means for storing the non-specific format files in said carryable memory media at a data area corresponding to the directory formed for storing non-specific format files. The portable information terminal unit also comprises means for forming a directory for storing specific format files, and stores such files in the carryable memory media at a data area corresponding to the directory formed for storing specific format files.

### BRIEF DESCRIPTION OF THE DRAWININGS

FIG. 1 shows a directory structure in a memory card in accordance with an exemplary embodiment of the present invention.
FIG. 2 is a block diagram showing a DSC hardware.
FIG. 3 shows an exemplary embodiment of the present invention; a state where a DSC has stored files in a memory card.
FIG. 4 is a block diagram showing hardware of a portable telephone unit.
FIG. 5 shows other exemplary embodiment of the present invention; a state where a portable telephone stored files in a memory card.
FIG. 6 is a block diagram showing hardware of a printer.
FIG. 7 shows other exemplary embodiment of the present invention; a state where a printer reads files out of a memory card.
FIG. 8 shows other exemplary embodiment of the present invention; contents of a directory formed by a DSC and a portable telephone.
FIG. 9 shows other exemplary embodiment of the present invention; a flow chart showing a CPU searching for file, when a memory card is attached in a printer.
FIG. 10 shows other exemplary embodiment of the present invention; a flow chart showing a printer reading Exif file out.
FIG. 11 shows other exemplary embodiment of the present invention; a flow chart showing the sequence of video processing in an information processing apparatus.
FIG. 12 shows an exemplary description of the Multipurpose Internet Mail Extension (MIME) format.
FIG. 13 shows a commonly used data format of memory card.
FIG. 14 is details of the directory entry area in the memory card of FIG. 13.
FIG. 15 shows other exemplary embodiment of the present invention; a directory structure of memory card before it is attached in a portable telephone unit.
FIG. 16 shows other exemplary embodiment of the present invention; a directory structure formed by portable telephone unit in a memory card attached thereto.
FIG. 17 shows other exemplary embodiment of a portable telephone unit of the present invention; a linking structure between an e-mail document file and an attached file.
FIG. 18 shows a state of directory after the file transfer.
FIG. 19 shows a state of administrating file after the file deletion and transfer.
FIG. 20 shows a conventional directory structure in memory card.

### DETAILED DESCRIPTION OF THE PREFERRED EMBODIMENT

Exemplary embodiment in accordance with the present invention is described referring to the drawings.

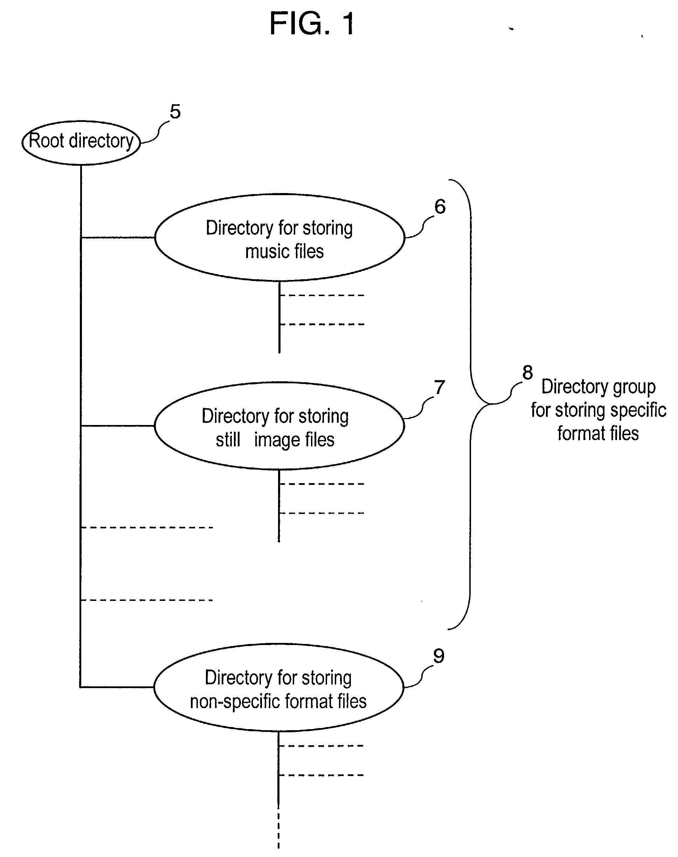

FIG. 1 shows a directory structure of memory card in accordance with an exemplary embodiment of the present invention. Among the carryable memory media, or memory cards, those already available in the market include SD Card (trade name), Memory Stick (trade name), Smart Card (trade name) and smart media. In the present embodiment, the SD Card (hereinafter referred to as memory card in a generic name) will be described as the example, since it has an advantage in the protection of copyrights, etc. over the other cards.

Referring to FIG. 1, directory of the memory card comprises a root directory 5, a directory group 8 for storing specific format files and a directory 9 for storing non-specific format files. The directory group 8 for storing specific format files comprises a directory 6 for storing music files, a directory 7 for storing still image files and other directories (not shown). MP3 and the like files of music file format, for example, are stored in accordance with the directory 6 for storing music files in a corresponding data area. Exif and the like still image files are stored in accordance with the directory 7 for storing still image files in a corresponding data area. Meanwhile, no specific format files are stored in accordance with the directory 9 for storing non-specific format files in a corresponding data area.

A memory card of the present embodiment has a structure where the directory group 8 for storing specific format files which contains the directory 6 for storing music files, the directory 7 for storing still image files and other directories for the specific format, as well as the directory 9 for storing non-specific format files, are disposed in the same branch locating at one rank lower branch of the root directory 5. The above-described structure is based on a consideration that when a CPU accesses to files stored in the respective directories referring to the directory entry and to the FAT (File Allocation Table), an overhead span of pursuing the pointers should be as small as possible, in order to make the efficiency of file search, etc. the highest possible.

The structure provides further operational advantage to the users. When a user tries to review the contents stored in a memory card of the present embodiment, since the directory group 8 for storing specific format files of various contents categories and the directory 9 for storing non-specific format files are disposed in the same branch level, the user can see them quickly on a monitor display.

A directory group 8 for storing specific format files corresponds to various contents of predetermined file format. Besides the example as shown in FIG. 1, independent directories may be provided for storing respectively the text format files, the moving picture files in MPEG and other formats, the print document files in TIFF and other formats, the sound source files in MIDI and other formats, the voice files in ADPCM and other formats, etc. (not shown).

On the other hand, the directory 9 for storing non-specific format files can also store those files whose file format is acceptable to the directory group 8 for storing specific format files, as well as those files whose file format is out of specification, hence whose file format is not accepted by the directory group 8 for storing specific format files.

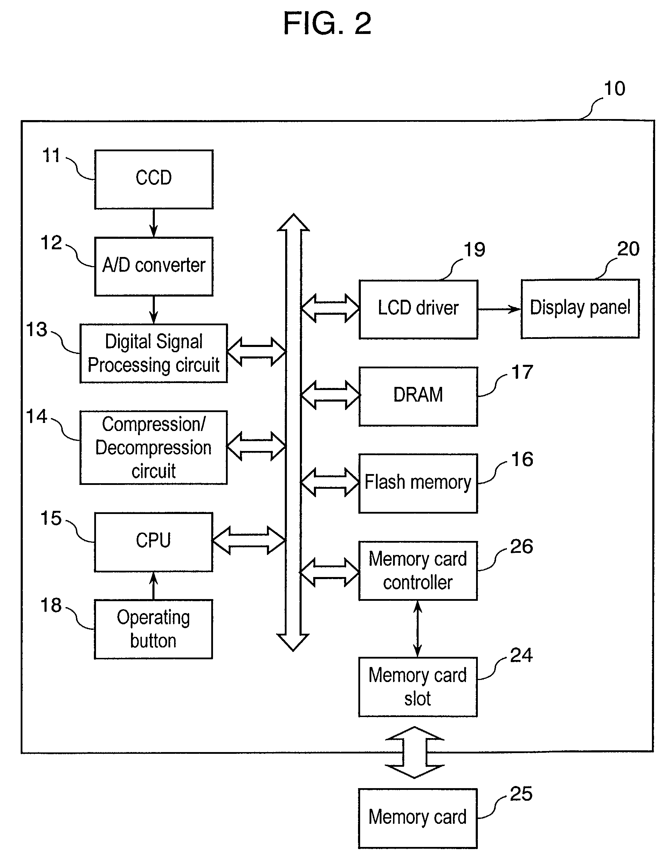

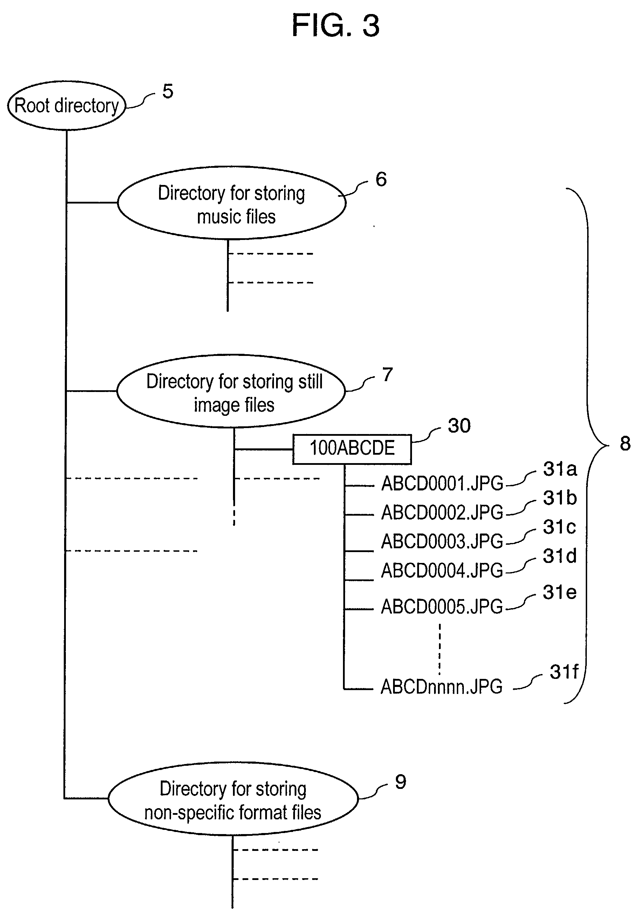

FIG. 2 is a block diagram showing a digital still camera (DSC) hardware. FIG. 3 shows an exemplary embodiment of the present invention; a state where a DSC stored files in the memory card. Now in the following, description is made on the storage of files by means of the directory for storing specific format files, referring to FIG. 2 and FIG. 3.

In the first place, a procedure how a DSC stores a file in a data area of memory card 25 which corresponds to the directory 7 for storing still image files, which being among the directory group 8 for storing specific format files, is described, as an example.

There can be varieties of portable information terminals, which store files in the memory card. To make the description simple, a DSC 10 is used as an example for the portable information terminal, and description is made on the procedure for storing a picture data generated by the DSC in the data area of memory card 25 corresponding to the directory 7 for storing still image files, which being among the directory group 8 for storing specific format files.

Referring to FIG. 2, the DSC 10 provides an image focused on the surface of a charge-coupled device (CCD) 11 through a lens unit (not shown). CCD 11 converts the optical image focused thereon into analog signals. An A/D converter 12 converts the analog signals generated from the CCD 11 into digital image signals.

A digital signal processing circuit 13 separates the digital image signals delivered from A/D converter 12 into luminance signal Y and color difference signals Cr and Cb, and performs the dynamic range adjustments, the color correction, the pretreatment for video compression and expansion, etc. A compression/decompression circuit 14 performs the DCT/inverse DCT calculation and the Huffman coding/decoding; as the result, it performs the compression/decompression which conforms to JPEG.

CPU 15 controls operation of the DSC at each constituent sectors in accordance with programs stored in, for example, a flash memory 16. DRAM 17 temporarily stores the image data compressed in the JPEG sequence at the compression/decompression circuit 14 delivered via a main bus. Part of the DRAM 17 area is allocated as the work area for the CPU 15.

Operating button 18 comprises a shutter. The CPU 15 detects operation status of the operating button 18 by a user, and controls the DSC at each part in line with the status of operation and in accordance with a certain specified sequence.

LCD driver 19 generates signals for driving a display panel 20. Also, it can display the optical image perceived by the CCD 11, or take out an image stored in a memory card, which is to be described later, for displaying it.

The carryable memory card 25 can be attached in a memory card slot 24. Memory card controller 26 controls the access conducted by the CPU 15 to the memory card 25 attached in the memory card slot 24. Thus a DSC can store an image file converted into the Exif format, or the standard specification for the relevant image file, in the data area corresponding to the directory for storing still image files in memory card 25. Next, the procedure for storing an image data generated by a DSC in a memory card 25 is described in detail referring to FIG. 3 and FIG. 2.

CPU 15 forms a thumbnail image of a certain predetermined size after sampling the original image. The CPU 15 transfers the thumbnail image to a compression/decompression circuit 14 via main bus. The compression/decompression circuit 14 compresses the thumbnail image in accordance with the JPEG sequence. The CPU 15 stores the image data of original image and compressed thumbnail image again in the DRAM 17.

Then, the CPU 15 adds header information containing the JPEG compressed thumbnail image, date/time of the picture taken, particulars of the camera used and other picture shooting conditions, etc. to the JPEG compressed file stored in the DRAM 1. An Exif format file is thus formed. Next, the CPU 15 makes an access to the memory card 25 via memory card controller 26, refers to the FAT (File Allocation Table) disposed in a certain predetermined area of memory card 25, and searches a directory 100ABCDE (30) provided in a lower branch of the directory 7 for storing still image files.

If either one, or both, of the directory 7 for storing still image files and the directory 100ABCDE (30) does not exist at this moment, the CPU 15 newly provides either one, or both, of the directory 7 for storing still image files and the directory 100ABCDE (30). Since the directory 100ABCDE (30) is, in practice, a directory to which a particular name of its own is given by each of the DSC manufacturers, the CPU 15 in each DSC provides file names sequentially to the pictures taken, in accordance with the directory 100ABCDE (30), and stores the Exif format still image file 31 in the memory card 25.

Each time when a user presses the shutter button of a DSC, the CPU 15 stores the Exif format file directory having file names ABCD0001.JPG (31a), ABCD0002.JPG (31b), ABCD0003.JPG (31c), ABCD0004.JPG (31d), ABCD0005. JPG (31e), ....., and ABCDnnnn. JPG (31f), in the order, in the directory 100ABCDE (30), which being a lower branch directory of the directory 7 for storing still image files. At the same time, the CPU 15 stores the Exif format still image files, in the order, in the data area of memory card 25 which corresponds to the respective file names 31a, 31b, 31c, 31d, 31e, ....., and 31f.

Now in the following, description is made on the storage of file in a memory card corresponding to the directory for storing non-specific format files. There are varieties of portable information terminal units in the names of, for example, portable telephone system, personal handheld system (PHS), portable data assistant (PDA), etc. with which the file format handled therein is not specifically established.

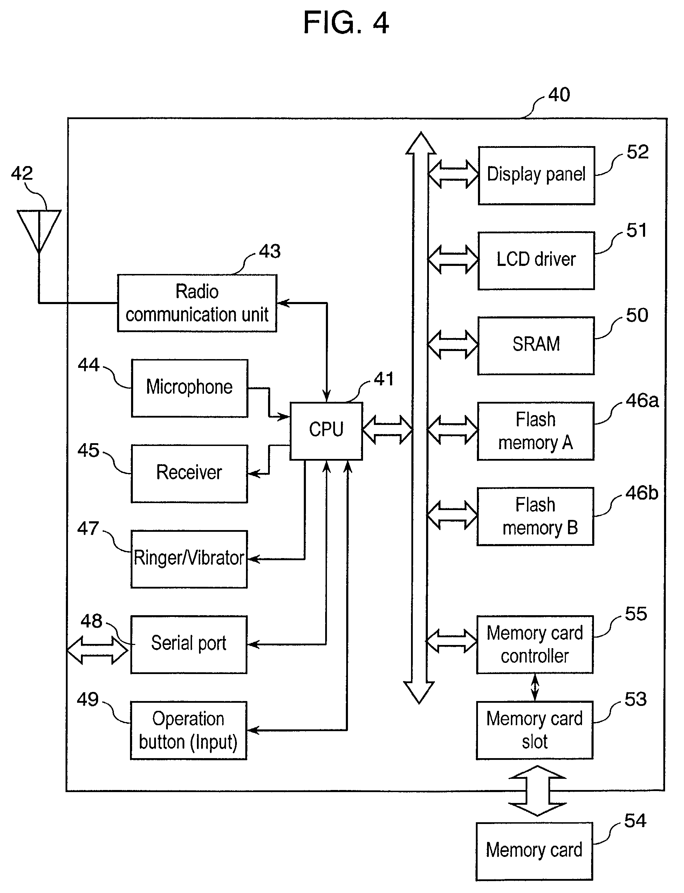

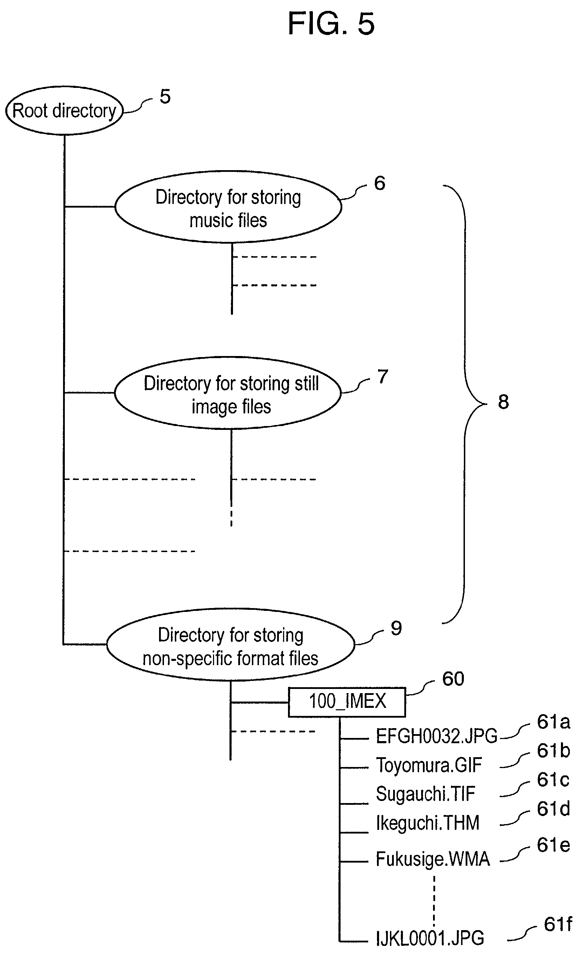

Referring to FIG. 4 and FIG. 5, the procedure how such portable information terminal stores files in a memory card is described. To make the description simple, a portable telephone unit is used to represent the portable information terminal.

FIG. 4 shows block diagram of hardware in a portable telephone 40. FIG. 5 shows a state where files have been stored in a memory card in the portable telephone.

In FIG. 4, a portable telephone 40 comprises a CPU 41. In the portable telephone 40, the CPU 41 controls the entire system in accordance with a program stored in a flash memory A 46a, which being a non-volatile memory device. The flash memory A 46a stores, besides the above program, various permanent data such as display letter font, animation data for display characters, etc. Flash memory B 46b, which being a non-volatile memory device, stores re-writable data such as e-mail data and attached file data received, telephone directory, memorandum and the like information for the personal management.

Antenna 42 has an extendable structure for making efficient wireless communication with a base station. Radio communication unit 43 has the receiving and transmitting functions. During communication, the radio communication unit 43 performs the impedance matching for making the transmittance and reception with the antenna 42 efficient, and the switching of transmitting and receiving. During receiving, the radio communication unit 43 converts the signal arrived from a base station into a local oscillation frequency, and then demodulates it. The demodulated signal is delivered to CPU 41. During transmitting, the radio communication unit 43 modulates the output signal delivered from CPU 41, and converts the modulated signal into a certain specific radio frequency and transmits it via antenna 42 to a base station.

Microphone 44 converts the sound into sound signals. Receiver 45 outputs the received sound signals via earphone, speaker, etc. after converting them into sound. Ringer/vibrator 47 generates a call sound, or a low frequency vibration that may not be heard by the ear, to notify the user about an incoming call or e-mail arrival from outside.

Serial port 48 is used when exchanging a history of e-mail transmittance/reception, for example, with a third party PC (not shown in the drawing).

Operation button 49, which includes power switch, comprises letter keys, alpha/numerical keys, symbol keys and other function keys. A user operates these keys at calling, registering and editing telephone numbers, deleting files, shifting place for storing files, and other operations.

CPU 41 uses an SRAM 50 for the work area.

LCD driver 51 controls displaying of e-mail documents, pictures received as the attached file, telephone numbers or the like information that have been stored in the non-volatile flash memory B 46b,etc., on a display panel 52 in accordance with the users operation and the instruction of the CPU 41.

Memory card slot 53 is for attaching a detachable memory card 54 therein. Memory card controller 55 controls the access to the memory card 54 attached in the memory card slot 53 by the instruction of CPU 41. In practice, up on the instruction the memory card controller 55 transfers attached files of e-mail that is temporarily kept in the flash memory B 46b in various file forms, to the corresponding data area, in accordance with the directory for storing non-specific format files in the memory card 54 (refer to item 9 in FIG. 1).

Next, using FIG. 5 and FIG. 4, the procedure how a portable telephone unit 40 stores the file received as an attached file of e-mail in the memory card 54 is described.

When a portable telephone unit 40 is in the state of e-mail-ready, it receives an e-mail sent from a provider via a base station, a ringer/vibrator 47 notifies a user of the e-mail arrival. The user, then, operates an operation button 49 to receive the e-mail sent from a sender. Then the CPU 41 receives the e-mail and file attached thereto and stores them temporarily in the flash memory B 46b.

Upon a subsequent operation of the user by the operation button 49, the CPU 41 interprets the e-mail data stored in the flash memory B 46b and then it develops characters based on the letter font stored in the flash memory A 46a, so that CPU 41 transfers them to the LCD driver 51. Display panel 52 displays the contents of e-mail by characters on the screen enabling the user to confirm the contents of e-mail.

Upon the next operating action by the user, the CPU 41 develops the attached file data stored in the flash memory B 46b, and transfers it to the LCD driver 51. If format of the attached file is the one the portable telephone unit 40 can not develop, the display panel 52 exhibits a message "Unable to display", for example, to notify the user of the situation. If the attached file has a file format the portable telephone unit 40 can develop, e.g. the BMP format, the CPU 41 transfers the developed attached file to the LCD driver 51. Then, the display panel 52 exhibits contents of the attached file data for confirmation by the user.

If a user tries to store the received attached file data in the memory card 54, the CPU 41 accesses to the memory card 54 via memory card controller 55, upon operation by the user. The CPU 41 refers to the File Allocation Table (FAT) disposed in a certain predetermined area of the memory card 54, and searches the directory 100_IMEX (60) provided in a lower branch of the directory 9 for storing non-specific format files.

If at this point, both, or either one, of the directory 9 for storing non-specific format files and the directory 100_IMEX (60) do not exist, the CPU 41 newly provides at least either one of the directory 9 for storing non-specific format files and the directory 100_IMEX (60) with the memory card 54.

The CPU 41 writes-in, without changing file name of attached file, the EFGH0032. JPG, Toyomura. GIF, Sugauchi. TIF (61) as it is, at a lower branch locating still lower than the directory 100_IMEX (60) which is disposed at the lower branch of the directory 9 for storing non-specific format files. In a case where the directory 100_IMEX (60) already had a file of the same name, the CPU 41 exhibits to notify the user of a message, "Same name file already exists", on the display panel 52. The user has to select whether writing-in the attached file data over it and preserve, or changing name of the file to be written-in.

As soon as finishing to store the file in the memory card 54, the CPU 41 preserves the attached file stored in the flash memory B 46b as it is, or deletes it, in accordance with a sequence determined by the user previously.

When deleting the attached file stored in the flash memory B 46b, the CPU 41 may either delete the relevant e-mail document file together, or delete the attached file alone after issuing a warning message to the user. A user can of course establish these operating instructions as a parameter, and store it previously in the flash memory B 46b as a user's parameter.

The power supply capacity and the available volume of a portable telephone body generally limit the scale of hardware and software resources that can be built therein. This means that it is generally impossible to expect a portable telephone unit 40 to have a capability comparable to a PC. Therefore, the conventional portable telephone units can not interpret all the formats of attached files they receive. It is difficult for the conventional portable telephone units to store without fail these files in the directory group 8 for storing specific format files, which group comprising the directory 7 for storing still image files and the directory 6 for storing music files, etc. In addition, there are still more new file formats increasing in the market, so it seems almost impossible to expect that a conventional portable telephone unit can judge all of the attached files in the file format delivered thereto.

In the conventional portable telephone unit, a user has no alternative other than to erase when he, or she, receives an attached file which the telephone unit can not reproduce.

A portable telephone unit of the present invention, however, is provided with a directory 9 for storing non-specific format files in the memory card 54, so that attached files are stored in a data area of the memory card 54 corresponding to the directory 9. Therefore, when the portable telephone unit 40 receives such files that can not be reproduced by itself, such files are stored first in the memory card 54. Afterwards, a user can read, listen or see contents of the files by putting the memory card 54 in a PC or other information terminals, which can read the memory card 54 containing the files described above.

When reproducing the files through the above-described arrangement, a PC or other information terminal may search only the directory 9 for storing non-specific format files besides the directory group 8 for storing specific format files which the PC or other information terminal can reproduce by itself.. By doing so, all the files can be reproduced by the PC or other information terminal extracting among those stored files in the memory card 54. More over it is not necessary for a PC or other information terminal unit to search all of the directories in the memory card, so the reproducible files can be extracted efficiently.

Next, detailed description is made on the procedure for extracting the file from the directory for storing specific format files and the directory for storing non-specific format files.

In a DSC or the like portable information terminal unit, a file of a certain predetermined file format is formed and stored in a memory card. Formatted file is stored in a data area of the memory card corresponding to the directory for storing specific format files.

A portable telephone or the like portable information terminal unit receives no specific format files as the attached file, and store it in the memory card. Received file is stored in a data area of the memory card corresponding to the directory for storing non-specific format files.

Thus the portable information terminal units receive such two types of files, as specific format files and non-specific format files. There can be such a case, for example, in a memory card 54, an Exif format file generated by a DSC exists in a data area of the memory card corresponding to the directory for storing specific format files, while other Exif format attached file exists in a data area of the memory card corresponding to the directory for storing non-specific format files.

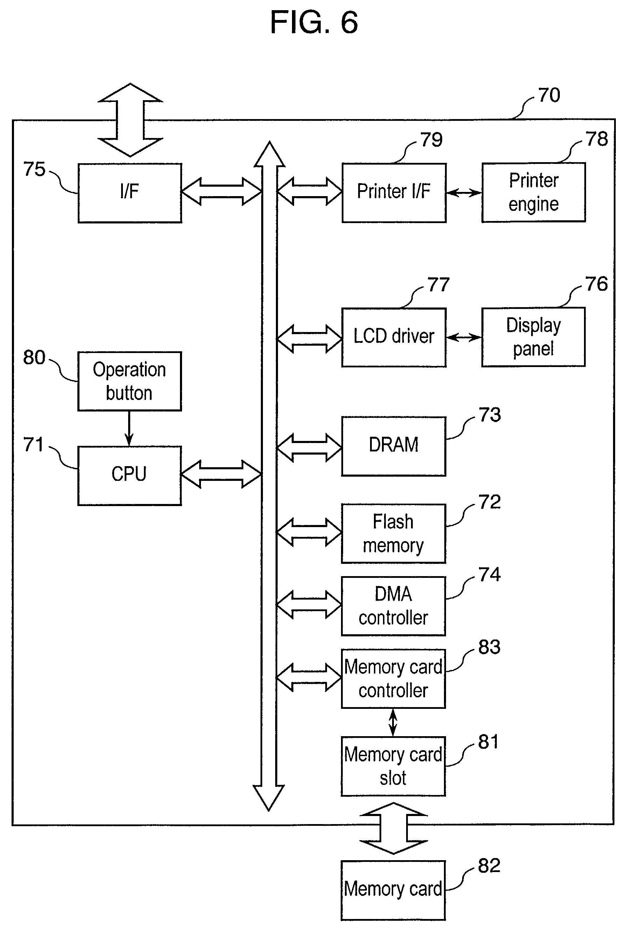

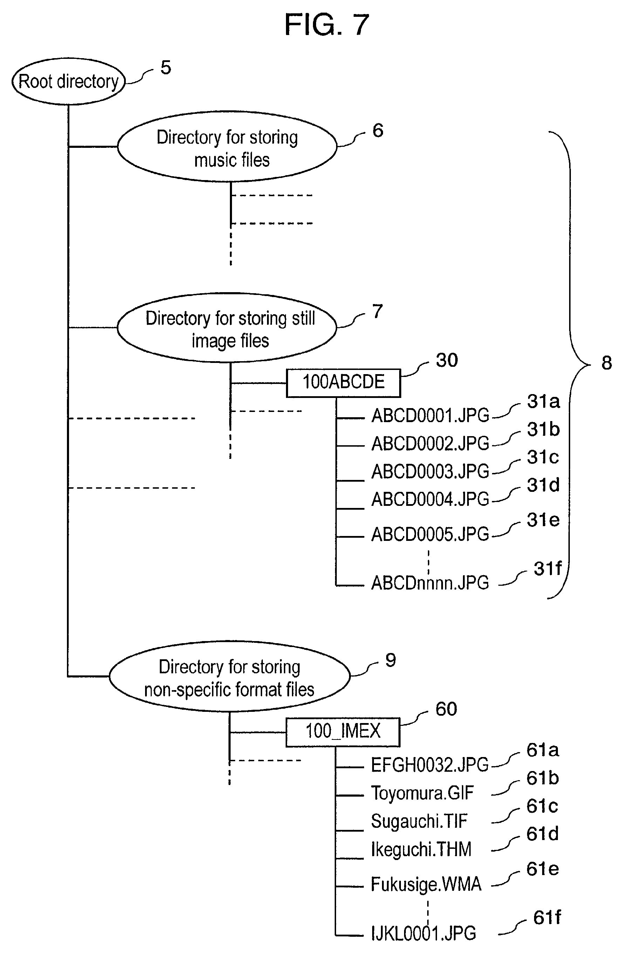

In FIG. 6 and FIG. 7, a printer is used as an example for the information terminal unit.

FIG. 6 is a block diagram showing hardware of a printer 70. FIG. 7 shows a state where the printer reads files out of a memory card 82.

In FIG. 6, the printer 70 comprises a CPU 71. The CPU 71 controls each of the constituent elements of the printer 70. Flash memory 72 stores a program for operating the CPU 71. DRAM 73 is used as the work area of the CPU 71, and it temporarily stores image data read out of a memory card, which will be described later.

DMA controller 74 controls the direct transfer of image data stored in the DRAM 73 to other hardware module.

Interface 75 intermediates between a PC (not shown), etc. and the printer 70, with respect to receiving of image data, or transmitting of information on operating condition of the printer to the PC.

Display panel 76 displays image data stored in the DRAM 73 as well as other advisory information to help a user operate it. LCD driver 77 drives the display panel 76, and makes LCD display panel 76 display the image data transferred by the DMA controller 74 from the DRAM 73.

Printer engine 78 corresponds to, for example, a thermal transfer color printer. Printer interface 79 transfers single-color image data delivered by the unit of one scanning line from the CPU 71, or the DMA controller 74, to the printer engine 78 by the unit of several pages. The printer engine 78 forms a color image based on the image data delivered via the printer interface 79. In the reverse route, the printer engine 78 sends information from sensors disposed therein to the CPU 71 via the printer interface 79.

CPU 71 also delivers via the printer interface 79 the magnetizing signal for driving a stepping motor (not shown) which is mounted on the printer engine 78 as the source of driving power. Operation button 80 collectively represents to a group of setting buttons and print operation buttons. These operation buttons 80 deliver the ON/OFF signals showing a certain state direct to an I / O port (not shown) of the CPU 71. The CPU 71 always watches the operation button 80 in the state of depression.

When a user attaches a detachable memory card 82 in a memory card slot 81, a memory card controller 83 makes the CPU 71 access to the memory card 82 attached in the memory card slot 81. Those image files conforming to the Exif format are read out.

Following descriptions explain the procedure from the searching of Exif format files stored in the memory card 82 until the printing. CPU 71 controls the memory card controller 83 to access to the memory card 82 attached in the memory card slot 81. The CPU 71 can read out any desired file among a plurality of directories within a memory card, referring to the directory-entry and the FAT. The printer 70 reads only the Exif format file corresponding to the directory 7 for storing still image files among the directory group 8 for storing specific format files, out of a data area of the memory card 82, which corresponds to the directory 9 for storing non-specific format files.

First, the CPU 71 controls the card controller 83 to access to the directory 7 for storing still image files in the memory card 82. Next, the CPU 71 accesses to the Exif format image file group stored in correspondence to the directory 100ABCDE (30); firstly, accessing to the file name ABCD0001.JPG (31a), so as to take the thumbnail image out of application marker segment (APP1) of the Exif format file.

Since the thumbnail image has also been compressed by JPEG, the CPU 71 expands the compressed file, ultimately storing data Y, Cb and Cr for the 160 x 120 image element onto the DRAM 73. Next, the CPU 71 accesses to the DRAM 73 to read out the data Y, Cb and Cr, and converts them into RGB data, so that it writes-in the converted data again onto the DRAM 73.

When the writing onto DRAM 73 is finished, the CPU 71 controls the DMA controller 74 to transfer the data stored in the DRAM 73 to an LCD driver 77 in the burst transfer mode, so as to display the data on a display panel 76. Since the bus system is not available during the burst transfer, the CPU 71 halts (except the operation of a built-in timer, etc.) for a short period of time. However, because the data transfer to the LCD driver 77 is performed in a high speed, a user would not notice the halt of the CPU 71 and have an impression as if the displayed picture was switched instantaneously.

When a user operates the operation button 80 to change the directory designation, the CPU 71 searches other file name ABCD0002.JPG (31b), ABCD0003.JPG (31c), ABCD0004.JPG (31d),ABCD0005.JPG (31e), or ABCDnnnn.JPG (31f), in the directory disposed in the same branch as each other under the directory 100ABCDE (30), so that the CPU 71 displays the Exif format file corresponding to the directory on the display panel 76, going through the same procedure as described earlier in relation to the file name ABCD0001.JPG.

Thus, a user can read the Exif format files stored in the directory 7 for storing sill image files.

When a user further operates the operation button 80 to designate the directory 9 for storing non-specific format files as the object of search, the CPU 71 accesses to the directory 9 for storing non-specific format files.

When accessing to the directory 9 for storing non-specific format files, the CPU 71 first accesses to the file stored in the directory 100_IMEX (60).

Since the directory 9 for storing non-specific format files is supposed to store non-specific format files, the CPU 71 checks the first file name EFGH0032.JPG (61a), to judge whether the files are readable or not.

In the above case, since the expansion index is JPG, the CPU 71 judges at a high possibility that it is readable and printable, and then the CPU 71 checks the application marker segment contained in the JPEG file to judge whether the relevant file is in conformity with the Exif format.

If the expansion index does not show .JPG, or the file does not conform to the Exif format despite its expansion index JPG, the CPU 71 proceeds to check the next file name Toyomura.GIF (61b).

On the other hand, if the relevant file is judged to be conforming to the Exif format, the CPU 71 displays the image on the display panel 76, going through the same manner as in the case of reading a file out of the directory 7 for storing still image files.

If at this point a user operates the operation button 80 to select next file, the CPU 71 accesses to file name Toyomura.GIF (61b). However, since the expansion index is .GIF (GIF file), the file can not be opened, and then next it checks next file name Sugauchi.TIF (61c). This file's expansion index is also TIF (TIFF file), so the file can not be opened. Subsequently, the thumbnail file names Ikeguchi.THM (61d) and Fukushige.WMA (61e) of Windows Media Audio file are checked one after another based on the expansion index. Since none of these files conform to the Exif format, the CPU 71 is unable to open these files.

When the CPU 71 finally reaches to the file name IJK0001.JPG (61f), the CPU 71 determines whether to open the file for display on the display panel 76, or unable to open the file going through the same judgment process as in the file name EFGH0032.JPG (61a). If the last file does not conform to the Exif format, the CPU 71 returns to the first file name EFGH0032.JPG (61a), so that the CPU 71 displays the image of this file name EFGH0032.JPG (61a) on the display panel 76 again.

After searching the directory 9 for storing non-specific format files, if the CPU 71 finds out that no file has the Exif format, the CPU 71 exhibits a message "No file able to be printed" on the display panel 76.

The following description explains the case when a user operates the operation button 80 to start printing. When he instructs to start printing, printer 70 puts the printer engine 78 into operation so as to print out the image of the display panel 76 on a sheet of paper.

As soon as the CPU 71 detects a depression of key for instruction to start printing, it accesses to Exif format file in the memory card 82 which corresponds to the image being displayed, and reads out the JPEG compressed data of the main image. Number of image elements varies depending on a DSC, so the size of main image is not specified. Therefore, prior to reading of the relevant Exif format file, the CPU 71 secures in advance a certain memory area in DRAM 73 based on the size of image stored in the application marker segment (APP1).

After decompressing the JPEG compression, the CPU 71 converts the data into those of the three fundamental colors Cyan (Cyn), Yellow (Ylw) and Magenta (Mgn) for printing, and stores them in the memory area secured in advance in the DRAM 73, separately.

When the conversion is finished with all the image data, the CPU 71 controls the DMA controller 74 to transfer via printer interface 79 first the Cyn image data stored in DRAM 73 to the printer engine 78 for one scanning line.

CPU 71 performs the DMA transfer in the burst mode by the unit of one scanning line. When the data transfer is finished for one scanning line, the DMA controller 74 outputs a cut-in signal to the CPU 71. Then the CPU 71 checks whether the data transfer is finished for one scanning line, and, at the same time, so that it sets a transfer source address in preparation of the DMA transfer for the next scanning line. The CPU 71 simultaneously counts the number of cut-in, and it continues the image forming until the cut-in counts reach a certain predetermined number.

As soon as transfer of the Cyn image data is finished, the CPU 71 instructs to print the Mgn in the same procedure. Ultimately, the printer engine 78 prints repeatedly the colors of Cyn, Mgn and Ylw to be overlaid on a recording sheet so as to complete a full-color print.

Although the memory card 82 used in the above exemplary embodiments has not been defined to a certain specific type, the SD Card is advantageous with respect to the copyright security; the SD Card can limit the duplicating generation of e.g. music files which are distributed on payment. The Memory Stick and other types of memory cards can of course be used for implementing the present invention.

Next description explains the extraction of Exif format file stored in a memory card.

CPU 71 controls the memory card controller 83 to make an access to the memory card 82 attached in the memory card slot 81. The CPU 71 can read out any desired file in accordance with the plurality of directories within the memory card 82, referring to the directory entry and the FAT (File Allocation Table) area disposed in a certain specific area of memory card 82. However, since objective of the information terminal of the present embodiment, or a printer 70, is printing, it is provided with a function for extracting only printable image files.

In above-mentioned explanations, although flash memory has been used as an example of non-volatile memory, such a non-volatile memory as EEPROM (Electrically Erasable and Programmable Read Only Memory) also can be used alternatively for the flash memory 16 of Fig. 2, the flash memory A 46a and the flash memory B 46b of Fig. 4, and the flash memory 72 of Fig. 6.

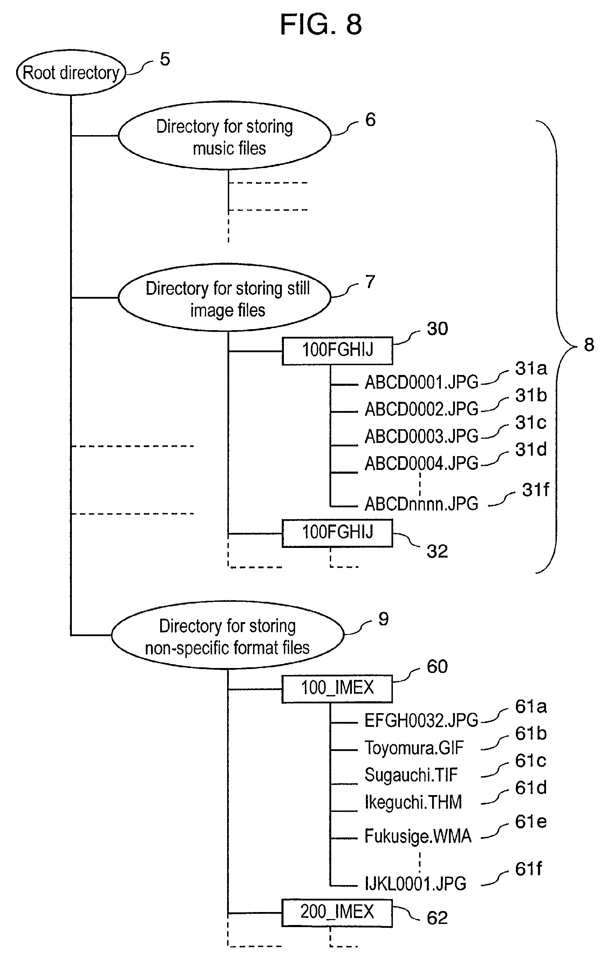

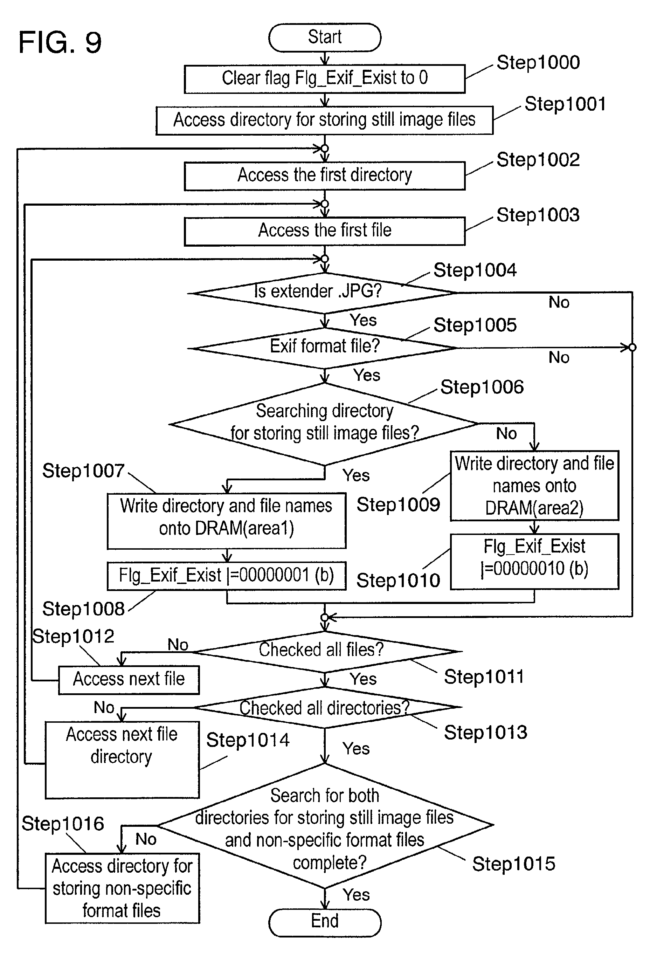

FIG. 8 shows other exemplary embodiment of the present invention; contents of directory formed by a DSC and a portable telephone. FIG. 9 is a flowchart showing a procedure in which the CPU 71 makes the file search when a memory card 82 is attached to the printer 70. The followings explain a procedure for extracting Exif format file in detail focusing on the flowchart shown in FIG. 9, using FIG. 6 and FIG. 8.

STEP1000 : When a CPU 71 detects that a memory card 82 is attached in memory card slot 81, it clears the variable of flag Flg_Exif_Exist stored in a DRAM 73 (work area of CPU 71) to zero. The flag Flg_Exif_Exist indicates whether there is any printable Exif format file, or not, in the directory 7 for storing still image files and the directory 9 for storing non-specific format files in the memory card 82.

STEP1001 : CPU 71 refers to the directory entry and the FAT, and then accesses to the directory 7 for storing still image files of the memory card 82.

STEP 1002 : CPU 71 accesses to the first directory 100ABCDE (30).

STEP 1003 : CPU 71 further accesses to the first file name ABCD0001. JPG (31a) stored in the directory 100ABCDE (30).

STEP 1004 : Upon access to the file, the CPU 71 first checks if expansion index of the file name ABCD0001. JPG (31a) is ". JPG" or not. This check is a simple comparing operation which compares only the last four letters of file name; if they are ". JPG" or ". jpg". So it can be operated at a high speed. Thus the CPU 71 roughly checks at the STEP1004 whether the relevant file is printable or not.

STEP1005 : If the expansion index is ". JPG" or ".jpg", then the CPU 71 accesses to substance of the file in search for a tag contained in the file, and judges whether the relevant file conforms to Exif format, or not.

Generally speaking, the Exif format file is the standard format for the image files generated by a DSC. The file contains JPEG compressed main image data, JPEG compressed thumbnail data of a certain specific size, data on image data itself such as image size, etc., or attached information on exposure conditions and the like picture taking conditions. At the top of each attached information, a tag of certain predetermined value is provided.

The information terminal of the present embodiment, or a printer 70, judges, in the tag, whether the relevant file is an Exif format file or not, based on the attached information essential to TIFF_Rev.6.0 and on the reference information of Exif_IFD, which includes particular information of the Exif. As described in the above, the printer can extract exactly only the printable files, by checking the tag in detail.

The tag-based judgment can cope with both the speed and the reliability of searching relevant file in combination with the before-mentioned rough screening using the expansion index.

STEP1006 : If expansion index of the relevant file is ". JPG" or ". jpg", and conforms to the Exif format, then the CPU 71 judges whether the directory under search is directory 7 for storing still image files, or not.

STEP1007 : If the directory under search is directory 7 for storing still image files, the CPU 71 writes-in directory name and file name onto the DRAM 73 at a certain specified area.

STEP1008 : Furthermore, the CPU 71 performs an OR calculation between the binary number 00000001 and the flag Flg_Exif_Exist which is the indication if Exif format file is stored in memory card or not, and then makes the flag ON which signifies that there is Exif format file existing in the directory 7 for storing still image files.

STEP1009 : On the other hand, if at the STEP1006 the directory under search is not directory 7 for storing still image files, namely if the directory under search is directory 9 for storing non-specific format files, the CPU 71 writes-in directory name and file name onto the DRAM 73 at a certain specified area. The specified area of DRAM 73 is the one that is different from what was described at STEP1007.

STEP1010 : CPU 71 performs an OR calculation between the binary number 00000010 and the flag Flg_Exif_Exist, which is the indication if Exif format file is stored in memory card or not, and it makes the flag ON which signifies that there is Exif format file existing in the directory 9 for storing non-specific files. If the at STEP1004 the expansion index is neither ".JPG", nor ".jpg", and at the STEP1005 the relevant file is judged not to be conforming to Exif format, the CPU 71 does not perform the procedures STEP1006 - STEP1011.

The information on the directory name under which the Exif format files are stored and the file name stored onto the DRAM 73 at STEP1007 and STEP1009 are called hereinafter as Exif format file list.

STEP1011 : CPU 71 judges if the file check is finished with all of the files within the directory 100ABCDE (30), in the present example, under checking process .

STEP1012 : If there is a file not yet checked, access is made to the next file ABCD0002. JPG (31b), in the present example, and returns to the STEP1004.

STEP1013 : If all of the files stored in the directory 100ABCDE (30) are checked, the CPU 71 judges whether the checking procedures of STEP1004 - STEP1008 are finished with all the directories 100ABCDE (30) and 100FGHIJ (32) disposed under the directory 7 for storing still image files, in the present example.

STEP1014 : If there exists a directory not checked, the CPU 71 accesses to the next directory 100FGHIJ (32), in the present example, and returns to the STEP1003.

STEP1015 : If the checking is finished with all of the files contained in the directory 7 for storing still image files, the CPU 71 judges whether the checking is finished with both of the directory 7 for storing still image files and the directory 9 for storing non-specific format files.

STEP1016 : If the checking is not finished with the directory 9 for storing non-specific format files, the CPU 71 makes access to the directory 9 for storing non-specific format files, and returns to the STEP1002, and conducts on the directory 9 for storing non-specific format files the same processing as done to directory 7 for storing still image files. If there is Exif format file stored, the CPU 71 writes-in the directory name and the file name onto the DRAM 73 as the Exif format file list, at the same time controls the relevant flag of Flg_Exif_Exist.

The procedure how Exif format file is extracted from memory card 82 has been described in the above with reference to the flowchart. The directory 9 for storing non-specific format files, among other directories, stores files of various forms from portable telephone and other portable information terminals.

Next description explains, in more practical aspect, the procedure for extracting the Exif format file out of the files stored in accordance with the directory 9 for storing non-specific format files.

When accessing to the directory 9 for storing non-specific format files, the CPU 71 first accesses to those stored in the directory 100_IMEX (60).

Since the directory 9 for storing non-specific format files is supposed to store those files of non-specific format in the memory card 82, the CPU 71 checks the expansion index of the first file name EFGH0032.JPG (61a) among the file directory located under the directory 100_IMEX (60), to judge whether the file is printable or not.

In the present case, since the expansion index is ".JPG", the CPU 71 judges that there is a high possibility that the file is readable and printable. And then checks if the file has an information particular to Exif format, so as to judge whether the relevant file conforms to Exif format.

If expansion index of the file is not ".JPG", or it does not conform to Exif format despite its expansion index ".JPG", the CPU 71 proceeds to check the next file name Toyomura.GIF (61b). On the other hand, if the relevant file is judged to be conforming to Exif format, the CPU 71 adds the name of the directory as well as file name to the file list for Exif format, which is already described.

CPU 71 tries to access to the file Toyomura.GIF (61b), but since the expansion index, ".GIF" indicates GIF file, CPU 71 does not check the attached information of the file and checks expansion index of the next file name Sugauchi.TIF (61c). Since its expansion index ".TIF" shows TIFF file, the CPU 71 skips over to check the attached information. CPU 71 goes, based on the expansion index, on checking the thumbnail file Ikeguchi.THM (61d) and then Windows Media Audio file of Fukusige.WMA (61e). None of these files has the expansion index ".JPG", therefore CPU 71 skips over to check their attached information.

CPU 71 ultimately reaches to a file name IJKL0001.JPG (61f). If the file name IJKL0001.JPG (61f) conforms to Exif format, it is added to the Exif format file list through the same procedure as described with respect to the file EFGH0032.JPG (61a)..

As described above, in an information terminal of the present embodiment, the CPU 71 extracts an Exif format file generated by e.g. a DSC in accordance with the directory 7 for storing still image files among the directory group 8 for storing specific format files. On the other hand, in accordance with the directory 9 for storing non-specific format files, the CPU 71 extracts an Exif format file received by such an information terminal as portable telephone which cannot specify the received files by itself. Thus a file of specific file form is extracted in accordance with both a certain specific directory (the directory 7 for storing still image files, in the present example) among the directory group 8 for storing specific format files and the directory 9 for storing non-specific format files. As the result, an Exif format file generated by a DSC and an Exif format file transferred via a portable telephone equally can be extracted from the memory card 82.

Furthermore, as described earlier, CPU 71 does not need to check any inner structure of received files which is eliminated by a primary screening by means of the expansion index, so that the load of CPU is much decreased.

Now the following descriptions explain how Exif format file is read out.

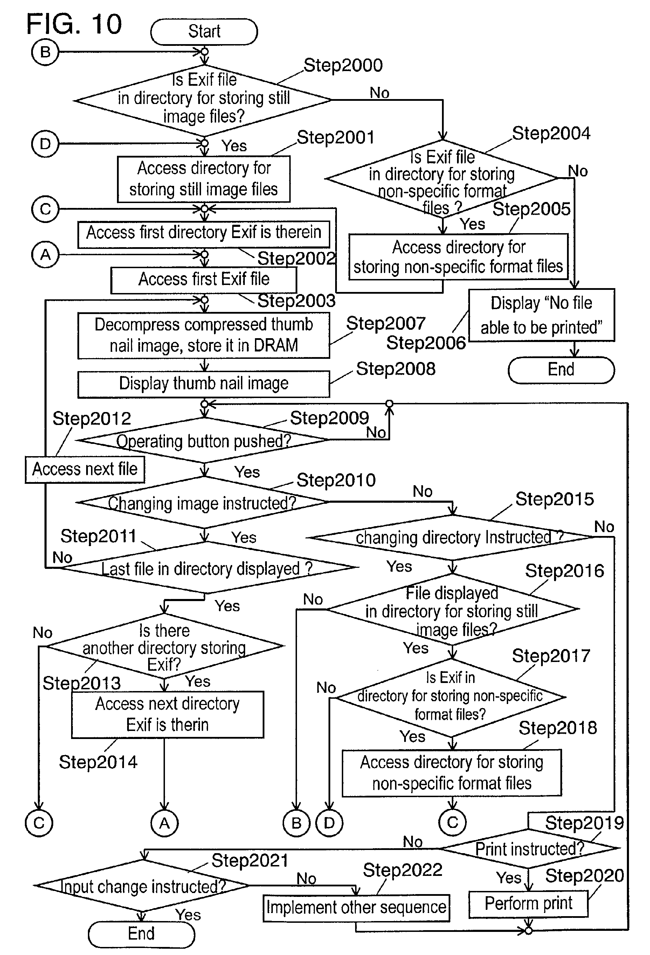

FIG. 10 is a flowchart showing how a printer 70, which is an example for the information terminal in the present embodiment, reads out Exif format file. With reference to FIG. 10, as well as to FIG. 6 and FIG. 8, the procedure of reading out the Exif format file performed by the printer 70 is described in detail. To make the description practical, an assumption is made with the embodiment of FIG. 8, that all of the files stored in accordance with the directories 100ABCDE (30) and 100FGHIJ (32) disposed in a lower branch of the directory 7 for storing still image files are Exif format files generated from a DSC, and that among the files stored in accordance with the directories 100_IMEX (60) and 200_IMEX (62) disposed in a lower branch of the directory 9 for storing non-specific format files, only the file names EFGH0032. JPG (61a) and IJKL0001. JPG (61f) indicate the Exif format files.

STEP2000 : CPU 71 first refers to the flag Flg_Exif_Exist, and judges whether there is Exif format file stored in the directory 7 for storing still image files.

STEP2001 : As described earlier in detail with respect to the extraction process for Exif format files, if the first bit of the flag Flg_Exif_Exist is ON, it represents the directory 7 for storing still image files contains Exif format file. Therefore, the CPU 71 accesses to the directory 7 for storing still image files, and;

STEP2002 : CPU 71 refers to Exif format file list stored in DRAM 73, and then accesses to the first directory 100ABCDE (30) containing the Exif format file; and

STEP2003 : CPU 71 accesses to the first file name ABCD0001. JPG (31a) containing the Exif format file.

STEP2004 : On the other hand, if in the STEP2000 there is no Exif format file stored in the directory 7 for storing still image files, the CPU 71 refers to the second bit of the flag Flg_Exif_Exist, and judges whether there is Exif format file stored in the directory 9 for storing non-specific format files.

STEP2005 : If there is an indication that the directory 9 for storing non-specific format files stores Exif format file, the CPU 71 accesses to the directory 9 for storing non-specific format files, and then proceeds to the STEP2002 process.

STEP2006 : If in the STEP2004 there is an indication that no Exif format file is stored in the directory 9 for storing non-specific format files, the CPU 71 exhibits "No file able to be printed" on the display panel 76, and then terminate the processing.

STEP2007 : CPU 71, after accessing to the first Exif format file name ABCD0001.JPG (31a) at the STEP2003, takes out thumbnail image from the application marker segment (APP1) which is contained in Exif format file. Since the thumbnail image is also JPEG compressed, the CPU 71 expands the compressed file in accordance with the JPEG decompression process, and ultimately stores the 160 x 120 image element data Y, Cb and Cr onto the DRAM 73. Next, the CPU 71 accesses to the DRAM 73 to read out the data Y, Cb and Cr, and converts them into the data R, G and B, and write the data R, G and B onto the DRAM 73 again.

STEP2008 : When the writing-in onto the DRAM 73 is finished, the CPU 71 controls the DMA controller 74 to transfer the data stored in DRAM 73 to the LCD driver 77 in the burst transfer mode to have it displayed on the display panel 76. Since the bus system is not available during the burst transfer, the CPU 71 halts (except the operation of built-in timer, etc.) for a short period of time. However, because the data transfer to LCD driver 77 is performed in a high speed, a user would not notice the halt and have an impression as if the displayed picture was switched instantaneously.

STEP2009 : When display of the thumbnail image corresponding to file name ABCD0001.JPG (31a) is finished, the CPU 71 checks state of the operation button 80. If the operation button 80 is not depressed, it returns to STEP2009 to form a loop.

STEP2010 : When a user operates the operation button 80, the CPU 71 checks which button among the operation buttons was depressed. If a button (not shown) for switching the items in a DSC was found out to have been depressed, it is interpreted that an instruction is given to switch the image within the same directory 100ABCDE (30).

STEP2011: Next, the CPU 71 judges whether the image under display corresponds to the final file name ABCDnnnn.JPG (31f), or not.

STEP2012 : If the image under display is not the final one among the file name, an access is made, based on the file name stored in DRAM 73, to a file name ABCD0002.JPG (31b) which corresponds the next Exif format file, and returns to the STEP20007.

After returning to the STEP2007, access is made to the next Exif format file name ABCD0002.JPG (31b), and a compressed thumbnail image contained in the relevant file is expanded, in the same manner as described with respect to the file name ABCD0001.JPG (31a), to be exhibited on the display panel 76.

STEP2013 : If at the STEP2011 the image being displayed is directory ABCDnnnn.JPG (31f) corresponding to the last image in the file name, then the CPU 71 refers to the Exif format file list stored in the DRAM 73 to check whether there is other directory including file names storing Exif format file therein. If the CPU 71 judges that there is no other file name corresponding to Exif format file, it returns to the STEP2002.

STEP2014 : If there exists other directory corresponding to Exif format file name 100FGHIJ (32), for example, the CPU 71 accesses to it, and returns to the STEP2003.

STEP2015 : If at the STEP2010 a switching button of the operation buttons 80 for switching the above items is judged not to have been depressed, the CPU 71 checks if a directory switching button (not shown) disposed in DSC was depressed.

STEP2016 : If the CPU 71 judges that the above-described switching button was depressed to instruct a directory change, it checks whether the directory corresponding to the Exif format file now displaying an image is included in the directory 7 for storing still image files.

In a case if the directory corresponding to the Exif format image file on display is not included in the directory 7 for storing still image files (namely, it is in the directory 9 for storing non-specific format files), the CPU 71 returns to the STEP2000.

STEP2017 : On the other hand, if at the STEP2016 the directory corresponding to the Exif format image file on display is included in the directory 7 for storing still image files, then the CPU 71 refers to the second bit of the flag Flg_Exif_Exist.

In a case if the second bit of the flag Flg_Exif_Exist is OFF (namely, no Exif format file is stored in the directory 9 for storing non-specific format files), the CPU 71 returns to the STEP2001 to access once again to the directory 7 for storing still image files.

STEP2018 : If at the STEP2017 the second bit of the flag Flg_Exif_Exist is ON (namely, Exif format file is stored in correspondence to the directory 9 for storing non-specific format files), the CPU 71 accesses to the directory 9 for storing non-specific format files, and returns to the STEP2002.

STEP2019 : If at the STEP2015 the depressed operation button 80 is judged that it is not the directory-switching button, the CPU 71 judges if a print button (not shown) is depressed instructing to start the printing, or not.

STEP2020 : If at the STEP2019 the above-described print button was found depressed, the printer prints the image being on display. As soon as the printing is finished, it returns to the STEP2009 to be ready for the next depression of the operation button 80.

STEP2021 : If at the STEP2019 the print was not depressed, the CPU 71 checks whether an input switching button (not shown) was depressed, or not. If an input switching button (not shown) disposed in DSC is depressed, and inputting of an image data from an external PC, for example, is instructed, the process is terminated and an image data input sequence is executed (the execution is not shown in FIG. 10).

STEP2022 : In a case if the input switching button was not depressed, the CPU 71 performs other sequence, for example, a filtering function for the Exif format files to be extracted, and returns to the STEP2009 to be ready for the coming depression of the operation button 80. The filtering function for the Exif format files performed at the STEP2022 is described below.

An information terminal in accordance with the present embodiment can select and print the Exif format file generated by a DSC. However, it takes quite a long processing time for an information terminal to perform the image display and selection alone, if the information terminal has only the reading function of above-described Exif format file and the number of file counts is high. Reason is that there is some directory which has a capacity of storing Exif format files for 9999 pieces maximum.

So, an information terminal in accordance with the present embodiment can filter to extract Exif format files using a date designated by a user, based on information made available by a tag (tag number : 9003Hex), which is an attached information to Exif format file that indicates the date when the original image data were generated.

Describing practically, if a user operates at the STEP 2022 the operation button 80 to designate a certain specific start date and end date, e. g. START : October 16, 2000 when the CPU 71 accesses to Exif format file based on the Exif format file list in the DRAM 73 at the STEP2003 and the STEP2012,then the CPU 71 extracts out of the Exif attached information the date when the original image data were generated, so that the CPU 71 compares the extracted date with the specific date data input by the user. CPU 71 expand the image file in only such Exif format file shows coincidence In the date, so that CPU 71 displays the thumbnail image at the STEP2008.

In most of the cases, photo pictures in silver-bromide (AgBr) film or digital data taken either by a AgBr film camera or a DSC are managed by the date when the picture was taken. Therefore, the above-described procedure for extracting only an Exif format file that conforms to a certain specific condition provides users with a significant easy-to-use advantage.

In the above example the date designation is pinpointed to a certain specific date. However, the date designation can be made to specify a certain term of time for filtering; for example, START : October 16, 2000 and END : December 10, 2000. Then, the Exif format files generated during the term can be extracted.

Furthermore, the Exif format files can handle such a location information attached as GPS-related one. Applying GPS information; an information terminal can extract only the Exif format files which meet a geographical area condition designated by an user in terms of the geographical longitudinal and latitudinal lines. More practically described, a user, by simply inputting location information designating a certain area, can easily extract the Exif format file corresponding to the directory for storing non-specific format files file among those delivered via a portable telephone unit from many travel spots. The information designating an area is not limited to the longitudinal and latitudinal lines. By linking a representative name of a place with an area designating information together in advance, a user, by simply inputting the place name, can extract the Exif format file bearing the GPS-related information of the adjacent area.

It is of course possible for a user to extract Exif format file based on a combined designation of date and location.

Next description is an example how a selected image data is printed.

When a user depresses the print button to start printing, a printer 70 prints the image being displayed on a display panel 76.

As soon as detecting the instruction for stating print , the CPU 71 accesses to the Exif format file stored in the memory card 25 or 82 which corresponds to the image on display, and reads out the main image in compressed JPEG.

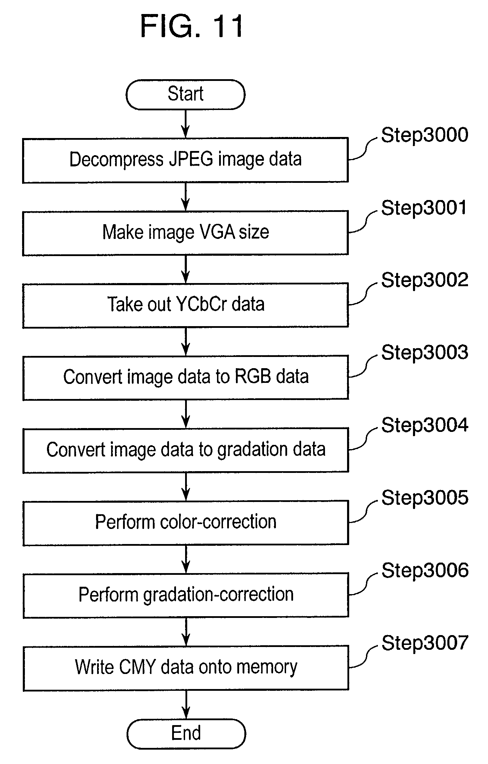

FIG. 11 is a flowchart showing the sequence of an information terminal in the present embodiment performing the image process. Referring to FIG. 11, and FIG. 6 and FIG. 7 together, sequence of image processing and printing are described in detail.

STEP3000 : CPU 71 reads out, via memory card controller 83, the Exif format file out of a memory card 82 attached in the memory card slot 81. The compressed file is expanded in accordance with the JPEG decompression sequence.

The decompressed image data are the luminance signal Y and color difference signal Cb and Cr. At this state, the number of image elements is less in the color difference signal Cb and Cr, as compared with that in the luminance signal Y. Therefore, the image elements in the color difference signal Cb and Cr need to be increased by means of interpolation or a simple replenishment up to the same number as that in the luminance signal Y.

STEP3001 : CPU 71 converts the decompressed image data to the VGA size (640 x 480 image element) in terms of the resolution, at each time when the number of scanning line reached a certain predetermined number. In the case of JPEG compressed data, the image data can be expanded by every standard processing block consisting of 8 x 8 image element. Therefore, the resolution conversion can be performed without expanding the entire image data at once. After the resolution conversion is finished, the CPU 71 stores the image data onto the DRAM 73, splitting it into the luminance signal Y and the color difference signal Cb and Cr.

STEP3002 As soon as all the image data are ready for an entire picture, the CPU 71 accesses to the DRAM 73, so as to take out data of the first image element in the order of luminance signal Y (8 bit), color difference signal Cb (8 bit) and Cr (8 bit). Then the image element is taken out one by one along with the order of location.

STEP3003 : The luminance signal Y, the color difference signal Cb and Cr taken out of the DRAM 73 are converted into RGB signal in accordance with the (Numeral 1).

### [Numeral 1]

R = Y + 1.402 (Cr - 128)
G = Y - 0.344 (Cb - 128) - 0.714 (Cr - 128)
B = Y + 1.772 (Cb -128)

STEP3004 : These signals R, G and B are the luminance signal, so they are converted into color density signals Dr, Dg and Db for printing, in accordance with the (Numeral 2).

### [Numeral 2]

Dr = (1023 / MaxOD) x min { MaxOD, log (X / 1023)}
Dg = (1023 / MaxOD) x min { MaxOD, log (X / 1023)}
Db = (1023 / MaxOD) x min { MaxOD, log (X / 1023)}

note that; MaxOD represents the maximum optical density of a printer; which differs depending on the three fundamental colors, Cyn, Mgn and Ylw.

The function min { MaxOD, log (X / 1023) } signifies that the one not a bigger the other among the two is selected.

The constant 1023 is for a 10bit process, it is 255 for an 8bit process.

The speed of conversion can be increased by writing-in the conversion data in advance onto a memory in accordance with the (Numeral 2), and then by adding the luminance signal values R, G and B, to, for example, the offset address which indicates the memory location, or by accessing progressively to the memory while adding the luminance signal values R, G and B to the first address of the R, G and B as the lower address.

STEP3005 : CPU 71 corrects color in the color density signal Dr, Dg and Db to generate the three fundamental color signals Cyn, Mgn and Ylw for printing. An information terminal 70 corrects color to suppress an influence caused by unwanted spectrum absorption band contained in the coloring material of respective ink ribbons or cartridges for Cyn, Mgn and Ylw. This is aimed to reproduce a clearer color image. An information terminal 70 in the present embodiment uses a so-called three-dimensional LUT (Look up Table) system, where conversion characteristics of the image elements in each of the color space being split lattice-wise are stored in advance as the Look up Table (LUT), so that CPU 71 corrects color by the interpolation in accordance with the conversion characteristics of each image element.

STEP3006 : After the signals Cyn, Mgn and Ylw have been formed through the color correction, an information terminal 70 corrects in gradation for compensating the non-linearity of the gradation caused by a print engine 78. Generally, the gradation correction can be implemented by accessing in the same method as processing the color density conversion, by using a table LUT prepared in advance through experiments. By correcting the gradation characteristics (usually called as the γ characteristic) intrinsic to a particular printer engine, CPU 71 adjusts the input value of data Cyn, Mgn and Ylw to the reproduced color density signals Dr, Dg and Db, so that they exhibit an almost linear relationship.

STEP3007 : CPU 71 stores the data Cyn, Mgn and Ylw thus formed onto the DRAM 73 progressively by the frame for each Cyn, Mgn and Ylw. Thus the CPU 71 stores the image data progressively in the order of frame of Cyn, Mgn and Ylw in memory, in which the luminance signal Y, color difference signal Cb and color difference signal Cr were initially disposed in the progressive order of picture-element. Consequently, data of the same color are disposed in a continuous address, so that the CPU 71 can transfer data in high speed helped by functioning of a DMA controller 74.

After storing the image data Cyn, Mgn and Ylw onto the DRAM 73, the CPU 71 controls the DMA controller 74 to transfer the image data Cyn stored in DRAM 73 first to the printer engine 78 by the unit of one scanning line via printer interface 79. In this case, the DMA controller 74 performs the DMA transfer in a burst mode by the unit of one scanning line. As soon as finishing the data transfer for one scanning line, the DMA controller 74 delivers a cut-in signal to the CPU 71. Upon receiving the cut-in signal, the CPU 71 checks if the data transfer is finished for one scanning line, so as to prepare for the DMA transfer of the next scanning line data. At the same time, the CPU 71 counts number of the cut-ins, and continues forming images until the cut-in counts reach a certain predetermined number.

After the transfer of DSC image data is finished, the CPU 71 prints the next color signal Mgn in the same procedure. Ultimately, the colors Cyn, Mgn and Ylw are printed to be overlaid in turn on a printing sheet to complete a full-color print.

In this way, only the Exif format file are taken out of the memory card 82 as the image data. The printer 70, or an information terminal, is required to have a function for processing only the Exif format files extracted for printing. Since the procedure of extracting the Exif format file remains unchanged even if a filtering is conducted based on information on the date, place, etc., the same image processing procedure for making a print can of course be applied on the files after filtering.

In the above embodiment, a printer 70 has been explained as an example of the information terminal. However, regardless of whether the information terminal is a portable unit or a desk top type unit, the present invention enables to mount various functions efficiently therein; for example, if an information terminal is supposed to extract MP3 or the like music form files, it can optimize e. g. a compressed file decoding means to the music reproduction in accordance with the file format extracted.

The above concept on the information terminals can be applied also to all of the other contents; text format, voice format, sound source format, printed,document format, etc. The information terminal extracts files of the conforming format out of a certain predetermined directory both the directory for storing specific format files and the directory for storing non-specific format files, so as to process it in accordance with the file format extracted.

The use of an SD (Secure Digital) memory card for the memory card 70 provides an additional advantage in the protection of copyrights on, for example, musical information with which no further reproduction to copy is allowed.

### <Separating attached file from e-mail document file>

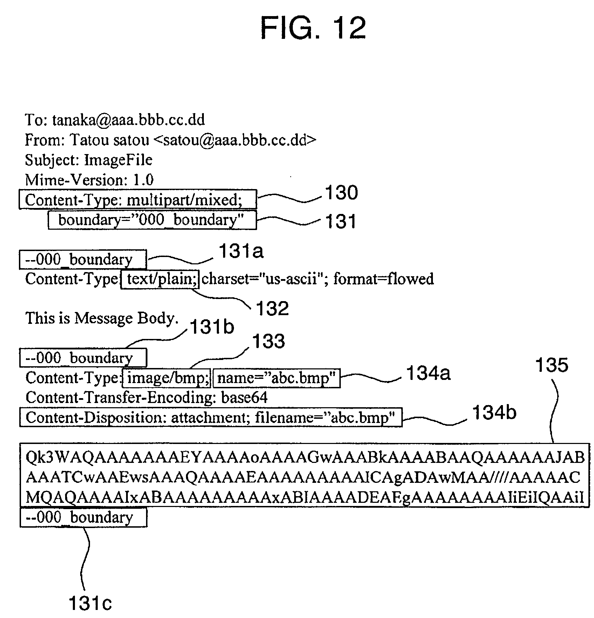

Receiving of an e-mail and the attached file by a portable terminal unit is described referring to FIG. 4 and FIG. 12. FIG. 12 is an example of MIME format.

When an e-mail arrives, CPU 41 stores the received e-mail data and the attached file in a flash memory B 46b. At the same time, it activates a ringer/vibrator 47 to notify the user about the arrival of mail.

In the following, an exemplary procedure of separating the received data into e-mail document and the attached files is described in detail referring to FIG. 4 and FIG. 12.

If there is an attached file, the MIME format contains the Content-Type tag 130 which is described for example, Content-Type: multipart / mixed. The Content-Type tag 130 shows a sign of "multi part" and "mixed" depending on that the body message contains a plurality of parts, and on that the body message contains plurality of different type in each of the parts, respectively.

Boundary tag 131 punctuates each of the parts and is defined as, for example, "000_boundary". In the present embodiment, each of the parts is punctuated with boundary 131a, 131b and 131c. The e-mail document file which being the main text, locates in between the boundary 131a and the boundary 131b. Its format is a plain text which is shown as "text / plain" 132. The attached file is in between the boundary 131b and the boundary 131c. Its format is a BMP form image which is shown as, for example, "image / bmp" 133. Name of the attached file is shown as, name = "abc.bmp" 134a, and "Content-Disposition : attachment; filename = "abc.bmp" 134b. Data of the attached file 135 are written in the form of lines of letters as shown in the drawing.

CPU 41 judges whether the received e-mail has attached file or not by means of the Content-Type tag 130. If it is an electronic mail accompanying attached file, the CPU 41 judges, based on the punctuation between the parts defined by the boundary tag 131, as that the first part is e-mail document file and the rest part is an attached file. There are some cases where e-mail document file and the attached file are further divided into a plurality of parts; for example, an e-mail document file (not shown) represented with TEXT and HTML (Hyper Text Markup Language).

For the data judged to be the main text of a mail, the CPU 41 establishes an expansion index ".txt" designated by the "text / plain" 132 in the Content-Type tag 130, and then stores the data in the flash memory B 46b.

For the data judged to be the attached file, the CPU 41 establishes an expansion index ".bmp" designated by the "image / bmp" 133 in the Content-Type tag 130, and then stores the data in the flash memory B 46b.

Based on operation of an operation button 49 by a user, the CPU 41 develops the e-mail document file thus separated and stored in the flash memory B 46b into a text data using a letter font stored in a flash memory A 46a, and then transfers it an LCD driver 51. In this way, the user can display contents of the e-mail main text on a display panel 52, and he can confirm the contents.

On the other hand, when upon user's operation of the operation button 49, the CPU 41 checks file form of the attached file to find out by means of the expansion index that it is the one which the portable telephone unit 40 can not develop, the CPU 41 exhibits such message as "Unable to display" on display panel 52. If it is a BMP file or the like file which the portable telephone unit 40 can develop, the CPU 41 develops the attached file data stored in the flash memory B 46b and transfers it to the LCD driver 51. In this way, the user can confirm contents of the attached file sent from a third party.

### <File system in a memory card>

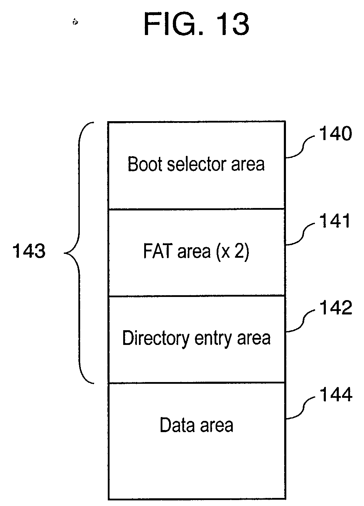

FIG. 13 shows an exemplary data format of a memory card. Description is made on a file system in memory card 54 or 82 and the directory structure which is one of the advantages the present invention offers. As both memory cards 54 and 82 have same structures and function as each other, the following descriptions use the memory card 54 as an example.

A memory card 54 comprises four areas, which are boot sector area 140, FAT area 141, directory entry area 142 and data area 144. Memory administrating area 143 is the name collectively designating the boot sector area 140, the FAT area 141 and the directory entry area 142.

The boot selector area 140 stores number of FAT (File Allocation Table), which is the parameter needed to read/write data from/to the memory card 54, and number of the directory entry counts, etc.

FAT area 141 has quite an important role in accessing to the memory card, and constitutes a FAT entry table. The FAT entry table contains information on the clusters used, the linking state of clusters forming files and subdirectories, and the information on bad clusters. Since a memory card 54 falls almost unable if even a part of the FAT area 141 is destroyed, a memory card is provided with two FAT areas of identical contents for backup.

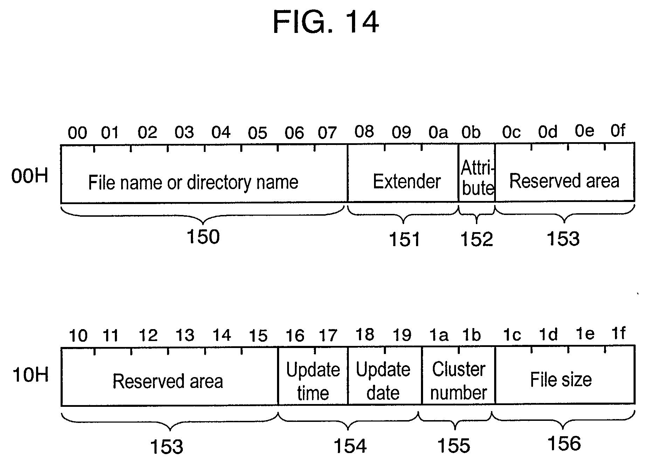

FIG. 14 shows details of the directory entry area 142 of the memory card of FIG. 13. The directory entry area 142 consists of 32 bytes by each file or by each directory, and stores file name 150 or directory name 150, expansion index 151, file attribute 152 indicating that it is read-only, secret, etc., reserved area 153, time and date of final modification 154 given to the file, cluster number 155 of file and directory started, and file size 156.

Data area 144 stores the substance of entire file data such as text, image, music, etc., and the directory entry of sub-directory formed at a lower branch of root directory.

### <Structure of directory formed in a portable telephone unit and in a memory card in the present embodiment>

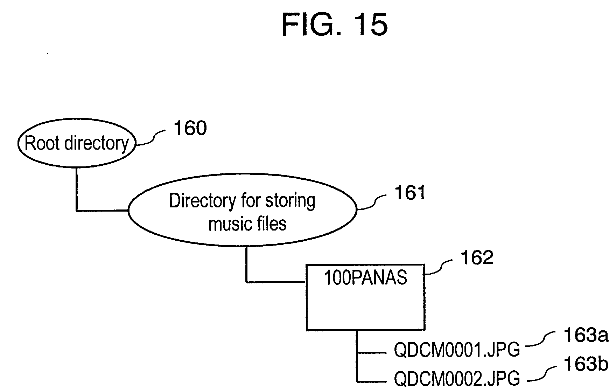

FIG. 15 shows other exemplary embodiment of the present invention; directory structure of a memory card before it is attached in a portable telephone unit. To make the following description simple, it is assumed that the memory card had been attached in a digital camera (not shown) and has been recorded some still images thereon, before it was inserted in the portable telephone unit.

In FIG. 15, a root directory 160 contains at an immediately lower branch a directory 161 for storing still image files corresponding to the file of still image file form e. g. Exif format file generated by a digital camera (not shown). A sub-directory 100PANAS 162 is formed in a lower branch of the directory 161 for storing still image files. The sub-directory 100PANAS 162 is a directory name proper to each of the digital camera makers, and the name is provided by the respective digital camera used for taking the picture. After taking a picture, the digital camera stores the image data in Exif format image file QDCM0001.JPG 163a and QDCM0002.JPG 163b disposed in a lower branch of the sub-directory 100PANAS 162.

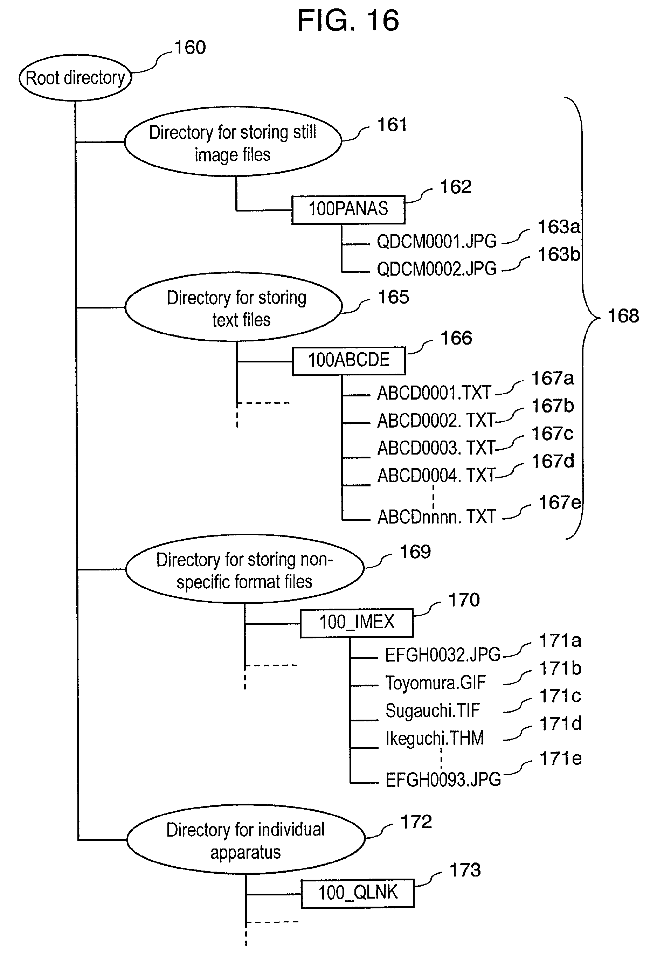

FIG. 16 shows a directory structure formed in a memory card by the portable telephone unit of the present embodiment.

In FIG. 16, a directory group 168 for storing specific format files contains a directory 165 for storing text form files e. g. e-mail documents, the directory 161 for storing still image files shown in FIG. 15, and other directory (not shown) for storing files of specific file form e. g. music data form and moving picture data form. On the other hand, a directory 169 for storing non-specific format files can store files of any free file form.

Directory for individual apparatus 172 in the present portable telephone unit, stores telephone directory, mail address book and other data on personal information. If a user uses the memory card in other apparatus, the user may store such information proper to the other apparatus in the directory for individual apparatus 172. For example, if a user uses the memory card in a printer, the directory 172 for individual apparatus may store color adjustment information generated by the user for the printer. In practical cases, sub-directories of unique names may be provided at a lower branch of the directory 172 for individual apparatus, and various information proper to each of the apparatus may be stored therein.

In the following descriptions explain, in referring to FIG. 4, FIG. 13, FIG. 15 and FIG. 16, how the directory is formed when a memory card is attached in a portable telephone unit.

When CPU 41 detects that a memory card 54 of FIG. 4 is attached by a user in a memory card slot 53 of portable telephone unit 40, then CPU 41 accesses via memory card controller 55 to the memory card 54. The CPU 41 checks, through the access, the state of memory card 54 in the directory entry area 142 (FIG. 13), as to whether there exists a directory 165 for storing text files and the sub-directory 100ABCDE 166 (FIG. 16), or not. If the CPU 41 judges there is no such directory, then it forms a new directory entry like FIG. 14 in the directory entry area 142 to have the directory 165 for storing text files and the sub-directory 100ABCDE 166 formed.

And then, the CPU 41 searches the state of the directory entry area 142 of memory card 54 of FIG. 4, and then checks if there exists a directory 169 for storing non-specific format files and its sub-directory 100_IMEX 170, or not. If the CPU 41 judges there is no such directory, then it forms a new directory entry in the directory entry area 142 to have the directory 169 for storing non-specific format files and the sub-directory 100_IMEX 170 formed.

Finally, the CPU 41 searches in a similar manner if there exists the directory 172 for individual apparatus and its sub-directory 100_QLNK 173 in the memory card 54. If no such directory exists, the CPU 41 forms a new directory.

As described above, the CPU 41 forms such directories as a directory 165 for storing text files in order to store the e-mail document file, as a directory 169 for storing non-specific format files in order to store the attached file and other received file, as a directory 172 for individual apparatus in order to store mainly the telephone directory and the like personal information, and as sub-directories at a lower branch of respective directories, on the memory card 54 which had only the directory 161 for storing still image files and the sub-directory 100PANAS 162 before it was attached in the portable telephone.

Root directory 160 contains a directory group 168 for storing specific format files such directories as directory 165 for storing text files, directory 161 for storing still image files, etc., and a directory 169 for storing non-specific format files, at the next lower branch. This structure contributes to raise the efficiency of file search by minimizing the overhead of CPU 41 needed for chasing the pointer when it makes access to the files stored in correspondence to respective directories referring to the directory entry.

Furthermore, in a case when a user confirms contents stored in the memory card using a PC, since the portable telephone unit of the present embodiment disposes the directory group 168 for storing specific format files provided by contents types and the directory 169 for storing non-specific format files at a next lower branch of the root directory 160, the user does not need to open the directory many times one by one on a monitor display for going into deeper branches. This arrangement has a great advantage in practical operation.

Still further, since the directory group 168 for storing specific format files comprising the directory 165 for storing text files, the directory 161 for storing still image files, etc., and the directory 169 for storing non-specific format files are disposed in the same branch, the directories in the same branch are exhibited simultaneously in one same window. This also is quite an advantage of the present embodiment, when a user confirms contents of the directories using a PC or the like other apparatus.

The directory group 168 for storing specific format files corresponds to various contents having a certain predetermined file form. Although FIG. 16 exemplifies only the directory 165 for storing test files and the directory 161 for storing still image files, it is possible in addition to form other independent directories (not shown) for storing respectively the music data file in MP3 or the like form, the moving picture data file in MPEG or the like form, the print document file in TIFF or the like, the sound source data file in MIDI or the like form, the voice data file in ADPCM or the like form, etc..

Meanwhile, the directory 169 for storing non-specific format files is a directory which can manage to store all the such file forms that could be stored in the above-described directory group 168 for storing specific format files, as well as, of course, those file forms for which there is no corresponding directory for storing specific format files, namely, those file forms which have any free form.

### <Storing files in the memory card at a data area corresponding to the directory for storing specific format files>

A portable telephone unit of the present embodiment stores a received e-mail document file, immediately after its arrival, once in a flash memory B 46b, and then transfers it to a memory card 54. The process is described with reference to FIG. 16, Fig. 14 and FIG. 4.

As described earlier, when the portable telephone unit 40 receives an e-mail document with attached file, it splits the mail into the e-mail document file and the attached file, and then it stores them in a flash memory B 46b.

Description is made here on the procedure how the portable telephone unit 40 stores the separated e-mail document file in correspondence to the directory 165 for storing text files.

CPU 41 first extracts the e-mail document file out of the flash memory B 46b based on instruction from the operation button 49 depressed by a user. Then, the CPU 41 accesses to a memory card 54 via memory card controller 55. Referring to a directory entry area 142 disposed in a certain predetermined memory administration area of memory card 54 and the FAT (File Allocation Table) area 141, the CPU searches the directory 165 for storing text files.

In a portable telephone unit of the present embodiment, after the CPU 41 finishes the checking whether there exists a directory 165 for storing text files or not, then CPU 41 checks whether there exists the sub-directory already, at the time when a memory card 54 is attached in memory card slot 53. Instead, the CPU 41 may check existence of the directory at the time when the file is actually stored in the memory card 54, and then, if the directory does not exist, it may form a new directory.

Each time when a user instructs to write-in an e-mail, the CPU 41 forms new file name ABCD0001.TXT 167a, ABCD0002.TXT 167b and ABCD0003.TXT 167c, in the order, at a branch further lower than the sub-directory 100ABCDE 166, which is locating at a lower branch of the directory 165 for storing text files, so that CPU 41 stores their respective text data in the data area of the memory card 54 corresponding to those file names above. In the case nnnn < 9999, the CPU 41 provides the file with a number ABCD (nnnn + 1), and stores the data. In the case nnnn = 9999, the CPU 41 is unable to provide a number, so it displays on a display panel 52 that it is unable to store the text file in the memory card 54.

After the e-mail document file is stored in the memory card 54, the CPU 41 either keeps the received data (e-mail with attached file) stored in the flash memory B 46b as they are, or deletes them, in accordance with a sequence predetermined by a user.

When deleting the received data stored in the flash memory B 46b, the CPU 41 may delete only the data corresponding to e-mail document file, among the data received. In this case, the attached file is not deleted, and kept as an independent file. The CPU 41 may delete the entire received data altogether. The CPU 41 can store an operational instruction concerning deletion of received data in the flash memory B 46b as a parameter determined by a user. Instead, the CPU 41 may store the operational instruction in the directory 172 for individual apparatus provided in the memory card 54.

### <Storing files in the memory card at a data area corresponding to the directory for storing non-specific format files>

Next, the following descriptions explain, with reference to FIG. 16 and FIG. 4 together, the procedure how a portable telephone unit stores a file received attached to an e-mail, or a file received as an independent file in the memory card 54, transferring from the flash memory B 46b of the portable telephone unit, in which they are stored at the moment immediately after they are received .

When a user wishes to transfer and store the attached file data stored in the flash memory B 46b to the memory card 54, the CPU 41 accesses, based on the instruction delivered from the operation button 49 operated by the user, to the memory card 54 via memory card controller 55. Further, the CPU 41 searches the directory 169 for storing non-specific format files referring to the FAT (File Allocation Table) area 141 and to the directory entry area 142 disposed in a certain predetermined memory administration area of memory card 54.

In a portable telephone unit of the present embodiment, the CPU 41 already checks whether or not there exists the directory 169 for storing non-specific format files and the sub-directory at the time when a memory card 54 is attached in memory card slot 53. Instead, may check the existence of the directory at the time when the file is actually stored in the memory card 54, so that if there is no such directory, the CPU 41 may form a new directory.

Each time when a user instructs to write-in an attached file, the CPU 41 writes-in the received attached file EFGH0032.JPG 171a, Toyomura.GIF 171b and Sugauchi.TIF 171c, without changing the file name, at a branch lower than the sub-directory 100_IMEX 170, which is locating in a lower branch of the directory 169 for storing non-specific format files. If there is the same file name in the sub-directory 100_IMEX 170, the CPU 41 exhibits "Same name file already exists" on the display panel 42. Upon seeing the display, the user selects whether to writing over it, or to preserve it by changing the file name.

After finishing to store the file in the memory card 54, the CPU 41 either keeps the received data having attached file stored in the flash memory B 46b as they are, or deletes them, in accordance with a predetermined sequence by a user.

When deleting the received data stored in the flash memory B 46b, the CPU 41 may delete only the data corresponding to attached file, without deleting the e-mail document itself and keeping it as an independent file. The CPU 41 may delete the e-mail document and the attached file altogether. Or, the CPU 41 can store an operational instruction concerning the deletion of received data in the flash memory B 46b as a parameter determined by a user. Instead, the CPU 41 may store the operational instruction in the directory 172 for individual apparatus provided in the memory card 54.

The procedure how the e-mail document file and the attached file are stored separately in the memory card 54 has been described in the above. In the present embodiment, the CPU 41 stores both the separated e-mail document file and the attached file in the data area corresponding to the directory 165 for storing text files and to the directory 169 for storing non-specific format files, respectively, upon one instruction given by a user. Thus the CPU 41 stores the e-mail document file and the attached file in certain specific respective directories, even though a user is ignorant about which file is to be stored in which of the directories.

Furthermore, a third party apparatus can use the attached files stored in the directory 169 for storing non-specific format files. Namely, in an exemplary case where the memory card 54 is pulled out of the portable telephone unit, and then inserted in a photo printer for printing still image files, the photo printer can extract a printable file by searching only the sub-directories disposed under two directories, viz. the directory 161 for storing still image files and the directory 169 for storing non-specific format files.

### <Procedure for an independent file received>

Data that can be received by a portable telephone unit are not limited to the e-mail with attached file. But the data could be, for example, image data made available by browsing a homepage on the Internet, or music data delivered from a specific provider, and so on.

When a portable telephone unit of the present embodiment receives a file without e-mail, to which a user instructs to store it in a memory card 54, the CPU 41 reads the received file data out of the flash memory B 46b, and then the CPU 41 stores the file data in a data area of the memory card 54 corresponding to sub-directory 100_IMEX 170 which is a lower branch of the directory 169 for storing non-specific format files. The above procedure is similar to that described under the item <Storing files in the memory card at a data area corresponding to the directory for storing non-specific format files>, so detailed description is omitted here.

When receiving an e-mail without attached file, to which a user instructs to store it in a memory card 54, the CPU 41 takes the e-mail data out of the flash memory B 46b, upon converting it to a text file, which the CPU 41 stores in the memory card 54 at a data area which corresponds to the sub-directory 100ABCDE 166 of the directory 165 for storing text files. The above procedure is similar to that described under the item <Storing files in the memory card at a data area corresponding to the directory for storing specific format files>, so detailed description is omitted here.

### <Linking e-mail document file with the attached file>

As described earlier, splits an e-mail received with an attached file into the e-mail document file and the attached file, so that the CPU 41 stores these in the data area corresponding to the directory 165 for storing text files and to the directory 169 for storing non-specific format files, respectively. When a user often faces a need to find out these plural files stored separately in the separate data area corresponding to the respective different directories which was related to each other, he has to find out the attached file by making use of an e-mail document file. In this case, these files should be linked to each other.

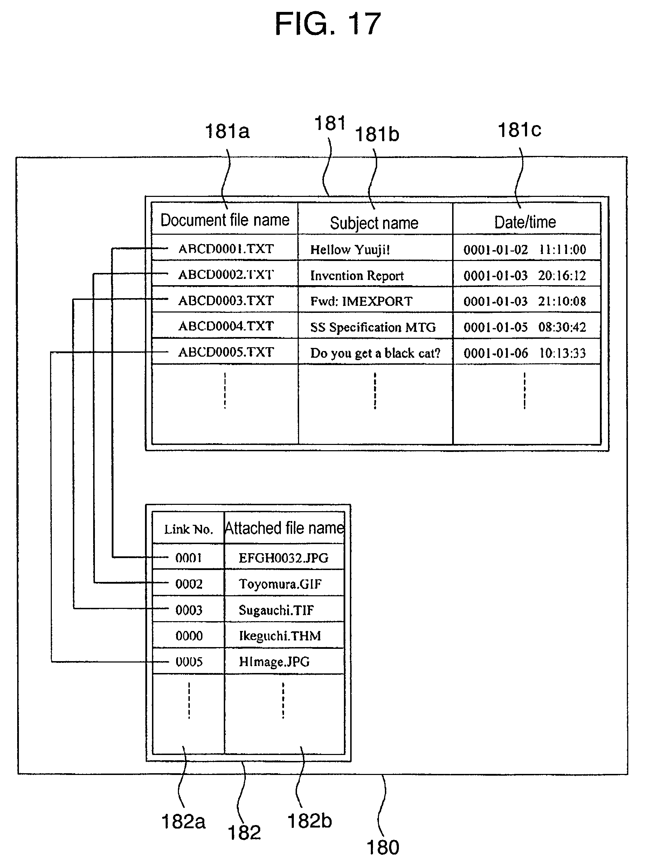

FIG. 17 shows a structure how in a portable telephone unit of the present embodiment links an e-mail document file to the attached file. Referring to FIG. 17, as well as to FIG. 16 and FIG. 4, description is made on a method for linking an e-mail document file to the attached file.

In FIG. 17, an administrating file 180 comprises at least an e-mail document file table 181 and an attached file table 182. CPU 41 forms the administrating file 180 at 100_QLNK 173 provided underneath the directory 172 for individual apparatus in the memory card 44. The administrating file 180 inter-links the two files stored respectively in the directory 165 for storing text files and the directory 169 for storing non-specific format files together, using these two tables 181 and 182.

The e-mail document file table 181 contains at least the document file name field 181a, the subject name field 181b and the date/time field 181c.

In the e-mail document file table 181, the document file name field 181a keeps copy of the file name of e-mail document stored in the memory card 54. The subject name field 181b stores the title of e-mail document file in a line of letters. The date/time field 181c keeps memory of the date/time when the portable telephone unit 40 received the e-mail.

On the other hand, the attached file table 182 contains at least the link number field 182a and the attached file name field 182b.

The link number field 182a links the E-mail document file table 181 with the attached file table 182. The link number field 182a stores the document file name, with the numerals of last four digits excluding the expansion index, stored in the document file name field 181a; namely, link numbers 0001, 0002, 0003, 0004 and 0005, ..... The link number "0000" in the link number field 182a shows that no corresponding file name exists, in other words that there is no e-mail document file corresponding thereto. Having the administrating file 180, for example, a user can search an e-mail document file based on subject name. The user first opens the relevant text file to display on a display panel 22 of the portable telephone unit 40, then browses the contents, so as finally to search for the attached file received with the e-mail at the same time, referring to the link number field 182a. A user can, of course, make the search period of time be narrower by referring to the date/time field 181c.

On the other hand, if a user searches the attached file name EFGH0032JPG, Toyomura.GIF, Sugauchi.TIF, Ikeguchi.THM or HImage.JPG, ....., the CPU 41 can extract document file name ABCD0001.TXT, ABCD0002.TXT, ABCD0003.TXT, ABCD0004.TXT, or ABCD0005.TXT, ....., based on the link number 0001, 0002, 0003, 0004, or 0005, ....., corresponding to file name.

As already described in the item <Storing files in a data area of memory card corresponding to the directory for storing non-specific format files>, based on one instruction given from a user, a portable telephone unit of the present embodiment stores separately the e-mail document file and the attached file in the separate area corresponding to the directory 165 for storing text files and the directory 169 for storing non-specific format files, respectively.

In the case where based on one instruction given by a user, the CPU 41 stored both the e-mail document file and the attached file in the memory card 24, the CPU 41 can renew the e-mail document file table 181 and the attached file table 182 at the same time. This offers a substantial practical advantage. If a user intentionally stored separately the e-mail document file and the attached file in a memory card 54, the e-mail document file table 181 and the attached file table 182 can be renewed independently. Namely, if a user stored only an e-mail document file in the memory card 54, only the -mail document file table 181 can be renewed; contrary to this, if a user stored only the attached file in the memory card 54, only the attached file table 182 can be renewed. If the attached file table 182 alone is renewed, the CPU 41 sets the relevant link number field 182a to be "0000", as described earlier. In the same manner, if a user receives an attached file independently and stores it in the memory card 54, only the attached file table 182 can be renewed.

### <Transmitting a file corresponding to the directory for storing non-specific format files>

With a portable telephone unit 40 of the present embodiment, a user can transmit a file selected from among the "received file" and the "still image file".

The transmitting procedure is described referring to FIG. 16, and to FIG. 4 and FIG. 5.

If a user selects "received file", the CPU 41 accesses to a sub-directory, for example, 100_IMEX 170, formed under the directory 169 for storing non-specific format files. The user selects any desired file, and transmits it by attaching it to an e-mail, based on the following descriptions explain such a procedure in detail. This function enables a user to transmit, through a portable telephone unit, a file of any form received as the attached file.

On the other hand, if a user selects "still image file", the CPU 41 searches a sub-directory, for example, 100PANAS 162 formed under the directory 161 for storing still image files. The user selects any desired file, and then transmits it by attaching it to an e-mail, based on the following a procedure to be described below in detail. This function enables a user to transmit, through a portable telephone unit, an image file generated by e. g. a digital still camera.

When a user operates an operation button 49 to select the-mail transmittance, the CPU 41 exhibits a message on a display panel 52 requesting the user to input title of the-mail to be transmitted. Upon reading the instruction on the display, the user inputs the title to be transmitted using the operation button 49. The CPU 41 accepts the title, and then stores it in the flash memory B 46b as a buffer.

Then, the CPU 41 exhibits a message on the display panel 52 requesting the user to input the main text of the e-mail. The user inputs the main text using the operation button 49. The CPU 41 accepts the main text and adds the TEXT expansion index (.Txt) to the title of the transmitting mail, so as to store it in a storage area for transmitting message (not shown) within the flash memory B 46b.

And then, the CPU 41 exhibits a message on the display panel 52 requesting the user to select whether the e-mail and the attached file are to be transmitted together. Responding to the display, if the user selects to transmit the attached file together by the operation button 49, the CPU 41 selects, through the earlier-described process, a file to be transmitted from among the "received file" and the "still image file".

Finally, the CPU 41 exhibits a message requesting the user to input an address to be sent to, and accepts such address inputted by the user through the operation button 49. When inputting the address, an address may be selected, for example among those registered in an address book stored in the flash memory B 46b or the memory card 44.

CPU 41 prepares a mail from the inputted main text, title, target address and the attached file based on MIME form. The CPU 41 sandwiches the e-mail's main text with the boundary 131a and the boundary 131b, and the attached file with the boundary 131b and the boundary 131c, respectively. The CPU 41 designates the file form of mail's main text with the Content-Type: as text/plain 132, while the file form of the attached file with the Content-Type: as image/bmp 133, and the attached file name as the names 134a and 134b, so as to constitute an entire-mail. And then, data of each of the parts are prepared at the last so that the CPU 41 transmits the mail as a multipart mail as indicated by the Content-Type tag 130 in FIG. 12. Since the electronic mail's transfer protocol is 7 bit ASCII data, if the form of each part is 8 bit letter or binary, the CPU 41 codes transmitting mail such as, 7 bit, Quoted-Printable or Base 64, and then stores the transmitting mail, in the same way as at the reception, in the flash memory B 46b as the transmitting information for keeping relationship with the attached file.

When the user operates the operation panel 49 to transmit, the CPU 41 transfers the e-mail data with the attached file stored in the flash memory B 46b to a radio communication unit 43. The radio communication unit 43 modulates the signal delivered from the CPU 41, and then converts it to a certain specific radio frequency to transmit the e-mail data via antenna 42 to base station. The base station sends the radio-transmitted e-mail data with the attached file to provider. The provider delivers the e-mail data to the target points through a network.

### <Procedure after a file is transmitted>

As described in the above, a portable telephone unit 40 of the present embodiment can transmit a file to the outside as the attached file to e-mail. In addition, a user of the portable telephone unit 40 of the present embodiment is provided with several options regarding the process for the transmitted file.

Processes for the transmitted file are described using FIG. 16 and FIG. 4 as follows.

A user can select a procedure among the following three cases for the transmitted file.

(Case 1) User deletes the transmitted file from the directory at the origin; namely, deleting it from the sub-directory locating at a lower branch of the directory 161 for storing still image files, or the sub-directory locating at a lower branch of the directory 169 for storing non-specific format files.

(Case 2) User retains the transmitted file as it is in the directory at the origin.

(Case 3) User shifts the transmitted file from the directory at the origin to a sub-directory of the directory 172 for individual apparatus, e. g. 100_QLNK 173.

Upon transmitting a file as the attachment to an e-mail, the CPU 41exhibits an option message, "Delete ?, Shift ?, No special action ?", on the display panel 42. Of course the option message can be a simple one, "Delete ? or Shift ?", leaving the option for "No special action" to a canceling operation by the user on the operation button 49.

(Case 1) is described first. When a user instructs "Delete", the CPU 41 deletes the relevant file stored in a sub-directory of the directory 161 for storing still image files, for example 100PANAS 162, or in a sub-directory of the directory 169 for storing non-specific format files, for example 100_IMEX 170. In the present exemplary case, the CPU 41 deletes the file name EFGH0032.JPG 171a which is located at a sub-directory 100_IMEX 170 in the directory 169 for storing non-specific format files. In practice, the deletion is completed when the CPU 41 simply writes-in the E 5 (hex) at the top of the file name 150 (FIG. 14) stored in the directory entry area 142 (FIG. 13) of 100_IMEX 170.

The user can prevent the files from endless increase in the directory 169 for storing non-specific format files is preventable, by deleting the file, which has been transmitted to a third party and became unnecessary. Otherwise upon receiving a file at each time, a portable telephone unit stores infinitively the files in the directory 169 for storing non-specific format files so as to reach no room for storing.

(Case 2) is described next. When a user selects "No special action", the transmitted file remains as it is at the origin, namely, in the directory 161 for storing still image files or in the directory 169 for storing non-specific format files.

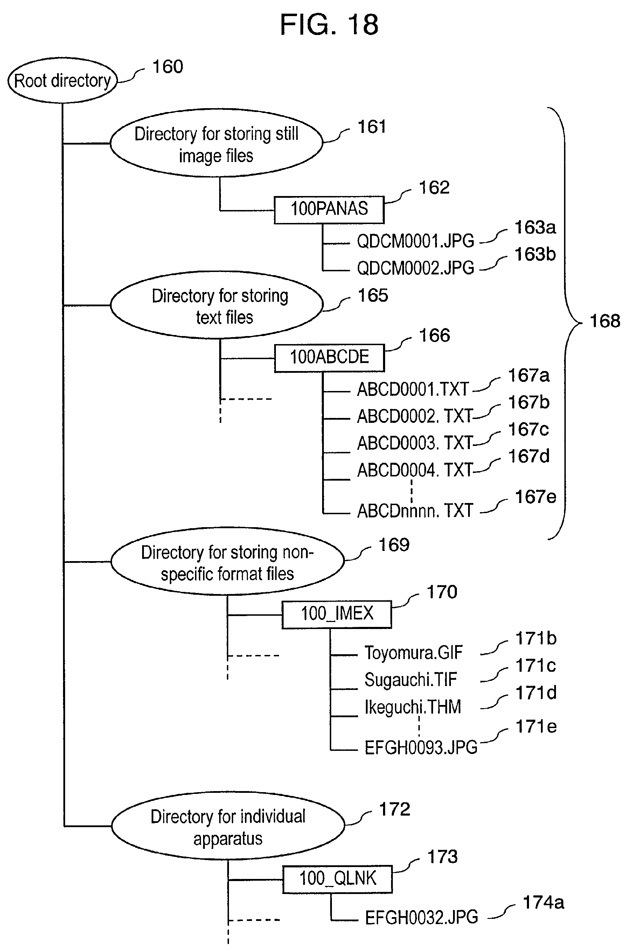

Finally, (Case 3) is described using FIG. 18 and FIG. 4. FIG. 18 shows a state of directory after the file shift. When a user gives the instruction "Shift", the CPU 41 shifts a relevant file stored in a sub-directory of the directory 161 for storing still image files e. g. 100PANAS 162, or in a sub-directory of the directory 169 for storing non-specific format files e. g. 100_IMEX 170; for example, the EFGH0032.JPG 171a disposed at sub-directory 100_IMEX 170 of the directory 169 for storing non-specific format files to under the sub-directory 100_QLNK 173 which is locating in the directory 172 for individual apparatus, with the original file name EFGH0032.JPG 171a as it is. In practice, deletion is made by simply writing-in the E 5 (hex) at the top of the file name 150 (FIG. 14) stored in the directory entry area 142 (FIG. 13) of 100_IMEX 170; a new field is formed in the directory entry area 142 corresponding to the sub-directory 100_QLNK 173 of the directory 172 for individual apparatus (FIG. 14). The shift between the directories is thus completed.

The shifting of transmitted file in accordance with the present invention brings about following advantage. CPU 41 in a portable telephone unit of the present embodiment makes reference only to the sub-directory of the directory 172 for individual apparatus, which is the place where the file is shifted to; namely, the CPU 41 basically refers only to a certain specific apparatus of a specific manufacturer. Therefore, a portable telephone unit of the present embodiment can avoid unwanted erasing of the files of great importance, which conventionally occurred by a careless operation. In the conventional method, the directory group 168 for storing specific format files and the directory 169 for storing non-specific format files are those that can be used universally by other apparatus of comparable functions; therefore, there is a risk that the other apparatus deletes by mistake the whole content of directory.

In such situations as Case 1 and Case 3 in which the files are stored in the directory 169 for storing non-specific format files, the transmitted file is deleted or shifted. So, the administrating file 180 as referred to in <Linking e-mail document file with the attached file> needs to be renewed.

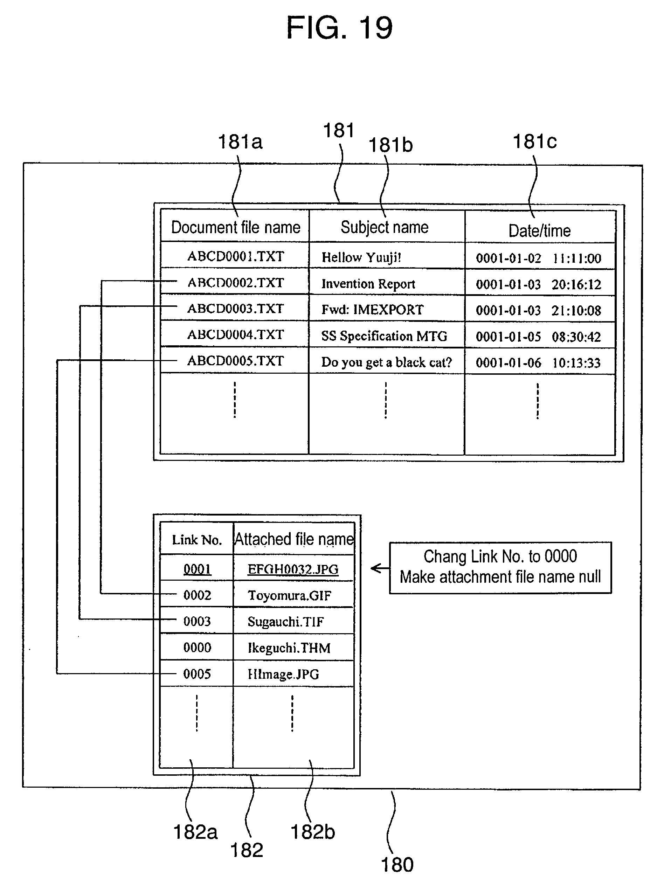

FIG. 19 shows a status of the administrating file 180 after the file deletion and shifting. In the following, description is made with reference to FIG. 18 and FIG. 4, in addition to FIG. 19. To be simple, description is made on an exemplary case where a portable telephone unit shifts the file EFGH0032.JPG 171a stored in the 100_IMEX 170, which is under the directory 169 for storing non-specific format files (FIG. 16), to the 100_QLNK 173 which is under the directory 172 for individual apparatus (FIG. 18). Since the deleting process is identical, it is described together.

When a user operates the operation button 49 to instruct deletion or shifting, of the transmitted files, the CPU 41 accesses in memory card 54 to the attached file table 182 of the administrating file 180 provided under the directory 172 for individual apparatus, so as to search for attached file name, and to extract the link number field 182a corresponding to the file name hit. As an example here, a case where a user shifts or deletes the attached file name EFGH0032.JPG is described. The EFGH0032.JPG has the link number field 0001, and corresponds to the ABCD0001.TXT in document file name field 181a, in the e-mail document file table 181.

The shifting or the deleting of an attached file means that the relevant file is brought out of the object of linkage. Therefore, in the first place the CPU 41 replaces the link number "0001" with a link number "0000". As described earlier, the link number "0000" signifies that there exists no corresponding e-mail. CPU 41 further makes the attached file name null 20 (hex). Through the above-described procedure, the CPU 41 deletes the file EFGH0032.JPG from the administrating file 180, and cancels the linkage with the e-mail document file.

In the structure thus formed, the CPU 41 can easily extract the non-linkage area by searching the area as null. Therefore, when a new e-mail with attached file arrives, the CPU 41 can reuse the field with which the linkage was canceled.

As described in the above, a portable telephone unit, by applying the present embodiment, does not need to be mounted with such sophisticated resources as a very large scale memory devices, a CPU having very fast operation speed, and so on. The other apparatus than the portable telephone can fully use all the contents delivered to and stored in the memory card of the unit. This offers a substantially practical advantage. Although only the portable telephone unit was used as an example in the above-described embodiments, the present invention can of course be implemented readily in other types of portable information terminals, such as e-mail terminal, PDA (Personal Digital Assistants), on which a memory card can be attached.

Many modifications and variations of the present invention are possible in the light of the above techniques.

It is therefore to be understood that within the scope of the invention, the invention may be practiced otherwise than as specifically described.

## Claims

1. Carryable memory media , comprising
i) at least one directory for storing specific format files, which files having a certain predetermined form, and
ii) a directory for storing non-specific format files, which files having any free form.

2. The carryable memory media of claim 1, wherein said directory for storing specific format files and said directory for storing non-specific format files are disposed in the same layer.

3. The carryable memory media of claim 1, wherein said directory for storing specific format files and said directory for storing non-specific format files are disposed in a layer immediately under a root directory.

4. The carryable memory media recited in claims 1 through 3, wherein the carryable memory media are memory card.

5. The carryable memory media recited in claims 1 through 3, wherein said directory for storing non-specific format files corresponds to storing those whose file form is the same as at least one of the file forms in the directory for storing specific format files.

6. A portable information terminal comprising carryable memory media detachable to and from the terminal body, comprising
means for forming a directory for storing non-specific format files and
means for storing non-specific format files in said carryable memory media, wherein
said means for forming a directory for storing non-specific format files forms a directory for storing non-specific format files in said carryable memory media, and stores non-specific format files in said carryable memory media at a data area corresponding to said directory for storing non-specific format files.

7. The portable information terminal of claim 6 comprising
means for forming a directory for storing specific format files and
means for writing files of specific form in said carryable memory media, wherein
said means for forming a directory for storing specific format files forms a directory for storing specific format files in said carryable memory media, and stores specific format files in said carryable memory media at a data area corresponding to said directory for storing specific format files.

8. A portable information terminal comprising carryable memory media detachable to and from the terminal body, wherein
said carryable memory media is provided with a first directory for storing files of one file form,
i) if a file to be stored conforms to the file form of said first directory of said memory media, said portable information terminal stores the relevant file in the carryable memory media at a data area corresponding to said first directory,
ii) if a file to be stored does not conform to the file form of said first directory of said memory media, said portable information terminal forms a second directory that is different from the first directory in said carryable memory media, and stores the relevant file in the carryable memory media at a data area corresponding to said second directory.

9. A portable information terminal comprising carryable memory media detachable to and from the terminal body, wherein
said carryable memory media is provided with a first directory for storing files of one file form,
i) if a file to be stored conforms to the file form of said first directory of said memory media, said portable information terminal stores the relevant file in the carryable memory media at a data area corresponding to said first directory,
ii) if a file to be stored does not conform to the file form of said first directory of said memory media, said portable information terminal notifies the user about the non-conformity,
iii) upon operation by a user, said portable information terminal forms a second directory that is different from the first directory in said carryable memory media, and stores the relevant file in said memory media at a data area corresponding to said second directory.

10. The portable information terminal recited in claims 8 and 9, wherein the portable information terminal forms a directory as a lower branch of said second directory, and stores the relevant file that does not conform to the file form of said first directory in the carryable memory media at a data area corresponding to said lower branch directory.

11. The portable information terminal recited in claims 6 and 7 comprising
communication means and
file forming means for forming files based on data received through said communication means, wherein
said means for storing files stores said formed file in said carryable memory media at a data area corresponding to said directory for storing non-specific format files.

12. The portable information terminal of claim 11, wherein an attached file attached to electronic mail received is stored in said carryable memory media at a data area corresponding to said directory for storing no-specific format files.

13. The portable information terminal of claim 11 comprising separation means for separating data received through said communication means into a plurality of files, wherein
i) at least one file among said plurality of files is stored in said carryable memory media at a data area corresponding to the directory for storing specific format files, and
ii) the remaining files are stored in said carryable memory media at a data area corresponding to said directory for storing non-specific format files.

14. The portable information terminal of claim 11 comprising
an operation section for operation by a user, and
separation means for separating data received through said communication means into a plurality of files, wherein
i) based on operation by a user of the operation section, at least one file among said plurality of files is stored in said carryable memory media at a data area corresponding to the directory for storing specific format files, and
ii) based on operation by a user of the operation section, the remaining files are stored in said carryable memory media at a data area corresponding to said directory for storing non-specific format files.

15. The portable information terminal of claim 11 comprising separation means for separating an e-mail with the attached file received through said communication means into the e-mail document file and the attached file, wherein
i) said e-mail document file is stored in said carryable memory media at a data area corresponding to the directory for storing specific format files, and
ii) said attached file is stored in said carryable memory media at a data area corresponding to said directory for storing non-specific format files.

16. The portable information terminal of claim 11 comprising separation means for separating e-mail with the attached file received through said communication means into the e-mail document file and the attached file, wherein
i) based on operation by a user of the operation section, the e-mail document file is stored in said carryable memory media at a data area corresponding to the directory for storing specific format files, and
ii) based on operation by a user of the operation section, the attached file is stored in said carryable memory media at a data area corresponding to said directory for storing non-specific format files.

17. The portable information terminal of claim 7 comprising file extraction means, wherein
said file extraction means extracts the file that conforms to a certain specific file form from both of the data areas of said carryable memory media; one data area is that which corresponds to said directory for storing specific format files and the other data area is that which corresponds to said directory for storing non-specific format files.

18. The portable information terminal of claim 17 comprising control means, wherein
said control means controls at least one process among the following processes to be performed on said extracted file for ;
i) deleting the file;
ii) shifting the file to a data area of said carryable memory media, which data area corresponding to a different directory
other than the original directory, and storing it in there;
iii) transmitting the file as an attached file; and
iv) exhibiting it on a display.

19. The portable information terminal of claim 17, wherein said file extraction means extracts the file that conforms to said specific file form, based on the file expansion index.

20. The portable information terminal of claim 17, wherein said file extraction means extracts the file that conforms to said specific file form, based on the file inner structure.

21. The portable information terminal of claim 17, wherein said file extraction means extracts the file that conforms to said specific file form, through a plurality of steps of extraction.

22. The portable information terminal of claim 17 comprising input means for inputting conditions for file extraction, wherein
said file extraction means extracts, among those which conform to said specific file form, the file that satisfies said conditions for file extraction.

23. The portable information terminal of claim 22 comprising control means, wherein
said control means controls at least one process among the following processes to be performed on said extracted file, for ;
i) deleting the file;
ii) shifting the file to a data area of said carryable memory media, which data area corresponding to a different directory
other than the original directory, and storing it in there;
iii) transmitting the file as an attached file; and
iv) exhibiting it on a display.

24. The portable information terminal of claim 17, wherein said file extraction means extracts the file that conforms to specific file form through the following process;
i) a primary extraction based on the file expansion index, and
ii) an extraction once again based on the inner structure of those extracted by said primary extraction.

25. The portable information terminal of claim 17 comprising a video processing function, said directory for storing specific format files containing a directory for storing video information form files, wherein
a video information file is extracted from both of the data areas of said carryable memory media; one data area is that which corresponds to the directory for storing video information form files and the other data area is that which corresponds to said directory for storing non-specific format files.

26. The portable information terminal of claim 17, wherein the portable information terminal extracts the Exif format image file through either one of the following processes;
i) extracting the JPG image file from data area of said carryable memory media based on the directory for storing non-specific format files, or
ii) extracting the image file from said carryable memory media based on the JPG expansion index . jpg of the directory for storing non-specific format files;
and a process of checking the inner structure of said image file extracted.

27. The portable information terminal of claim 26, wherein the portable information terminal prints the extracted Exif format file upon an operation made by a user.

28. The portable information terminal recited in claims 6 and 7 comprising communication means, wherein
the portable information terminal transmits the attached file stored in a data area corresponding to said directory for storing non-specific format files via said communication means, accompanying an e-mail.

29. The portable information terminal of claim 28 comprising file control means, wherein said file control means deletes a file which had been stored in a data area corresponding to said directory for storing non-specific format files after it is transmitted via said communication means.

30. The portable information terminal of claim 28 comprising file control means, wherein said file control means shifts a file that had been stored in a data area corresponding to said directory for storing non-specific format files after it was transmitted via said communication means, to a data area of said carryable memory media that corresponds to a certain directory other than said original directory for storing specific format files and said original directory for storing non-specific format files.

31. The portable information terminal of claim 28 comprising instruction means, wherein said instruction means issues one of the following instructions based on operation of the operation section by a user, after a file stored in a data area corresponding to said directory for storing non-specific format files is transmitted via said communication means, regarding how the transmitted file be handled :
i) leaving the transmitted file in said directory for storing non-specific format files;
ii) deleting the transmitted file;
iii) shifting the transmitted file to a data area of said carryable memory media that corresponds to a certain specific directory other than said original directory for storing specific format files and said original directory for storing non-specific format files.

32. A method for managing files in a portable information terminal comprising carryable memory media detachable to and from the terminal body, comprising the steps of:
A) forming a directory for storing non-specific format files in said carryable memory media; and
B) storing a file in said carryable memory media at a data area corresponding to said directory for storing non-specific format files.

33. The method for managing files in the portable information terminal recited in claim 32, comprising the steps of:
C) forming a directory for storing specific format files in said carryable memory media; and
D) storing a file in said carryable memory media at a data area corresponding to said formed directory for storing specific format files.

34. The method for managing files in the portable information terminal recited in claims 32 and 33, comprising the steps of:
E) receiving data through communication means;
F) forming a file based on the data received at step E); and
G) storing the file formed at step F) in said carryable memory media at a data area corresponding to said directory for storing non-specific format files.

35. The method for managing files in the portable information terminal recited in claims 32 and 33, comprising the steps of :
E) receiving an electronic mail through communication means; and
H) storing an attached file attached to the electronic mail in said carryable memory media at a data area corresponding to said directory for storing non-specific format files.

36. The method for managing files in the portable information terminal recited in claims 32 and 33, comprising the steps of :
E) receiving data through communication means;
J) separating received data into a plurality of files;
K) storing at least one file among said plurality of files in said carryable memory media at a data area corresponding to said directory for storing specific format files; and
L) storing the remaining file in said carryable memory media at a data area corresponding to said directory for storing non-specific format files.

37. The method for managing files in the portable information terminal recited in claims 32 and 33, comprising the steps of:
E) receiving data through communication means;
J) separating received data into a plurality of files;
M) based on a first operation by a user, storing at least one file among said plurality of files in said carryable memory media at a data area corresponding to said directory for storing specific format files; and
N) based on a second operation by a user, storing the remaining file in said carryable memory media at a data area corresponding to said directory for storing non-specific format files.

38. The method for managing files in the portable information terminal recited in claims 32 and 33, comprising the steps of:
P) receiving an e-mail with the attached file through communication means;
Q) separating the received e-mail with the attached file into the document file and the attached file;
R) storing said document file in said carryable memory media at a data area corresponding to said directory for storing specific format files; and
S) storing said attached file in said carryable memory media at a data area corresponding to said directory for storing non-specific format files.

39. The method for managing files in the portable information terminal recited in claims 32 and 33, comprising the steps of:
P) receiving an e-mail with the attached file through communication means;
Q) separating the received e-mail with the attached file into the document file and the attached file;
T) based on a first operation by a user, storing said document file in said carryable memory media at a data area corresponding to the directory for storing specific format files; and
U) based on a second operation by a user, storing said attached file in said carryable memory media at a data area corresponding to said directory for storing non-specific format files.

40. The method for managing files in the portable information terminal of claim 39 comprising the step of
transmitting the attached file stored in said carryable memory media at a data area corresponding to said directory for storing non-specific format files as an attachment to a new e-mail.

41. The method for managing files in the portable information terminal of claim 39 comprising the steps of:
V) transmitting the file stored in said carryable memory media at a data area corresponding to said directory for storing non-specific format files; and
W) after said file is transmitted, deleting said transmitted file.

42. The method for managing files in the portable information terminal recited in claim 39 comprising the steps of :
V) transmitting the file stored in said carryable memory media at a data area corresponding to said for storing non-specific format files; and
X) after said file is transmitted, shifting said
transmitted file to a data area corresponding to a certain directory other than said original
directory for storing specific format files and said original directory for storing non-specific format files in said carryable memory media.

43. The method for managing files in the portable information terminal recited in claim 39 comprising the steps of :
V) transmitting the file stored in said carryable memory media at a data area corresponding to said directory for storing non-specific format files;
Y) after transmitting said file, a user
selecting either one of following steps based on operation ;
Y-1) leaving said transmitted file in said carryable memory media at a data area corresponding to said directory for storing non-specific format files;
Y-2) deleting said transmitted file; and
Y-3) shifting said transmitted file to a data area corresponding to a certain directory other than said directory for storing specific format files and said directory for storing non-specific format files in said carryable memory media.

44. The portable information terminal of claims 6 through 31, wherein the portable information terminal is a portable telephone unit.

45. The method for managing files in the portable information terminal of claims 32 through 43, wherein the portable information terminal is a portable telephone unit.

46. The carryable memory media of claim 5, wherein the carryable memory media are memory card.

47. The portable information terminal of claims 6 through 31, wherein the carryable memory media are memory card.

48. The method for managing files in the portable information terminal of claims 32 through 43, wherein the carryable memory media are memory card.
